# EUROPEAN PATENT APPLICATION

(11) **EP 4 642 116 A1**
(43) Date of publication of application: **29.10.2025**
(21) Application number: 22968996.3
(22) Date of filing: 23.12.2022
(51) Int. Cl.: H04W 64/00, G06N 3/02

(54) **MODEL UPDATING METHOD AND DEVICE**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN)
(74) Representative: RGTH
(86) International application number: PCT/CN2022/141498
(87) International publication number: WO 2024/130709

(57) **Abstract**

A model updating method and device. The method comprises: according to first information, and/or first indication information of a second device, a first device determines a target updating mode of a first model from a plurality of updating modes, wherein: the first model is used for determining position-related information of a terminal device; the first information comprises a performance parameter of the model; the first indication information is used for indicating the target updating mode; and the plurality of updating modes comprise at least two of the following: a first updating mode, used for updating some of model parameters and/or a model structure of the first model; a second updating mode, used for updating the first model to be a second model; and a third updating mode, used for updating the first model to be a third model, wherein the third model is obtained on the basis of sample set training in a plurality of scenarios.

## Description

### TECHNICAL FIELD

Embodiments of the present disclosure relate to the field of communications, and specifically, to a method of model updating and a device for model updating.

### BACKGROUND

In some scenarios, an artificial intelligence (AI) model or a machine learning (ML) model is considered to be utilized to estimate the location of a terminal device. Specifically, an AI/ML model in a specific scenario is obtained by collecting data in the specific scenario for training, and if the model is applied to other scenarios, a positioning accuracy will drop significantly. In this case, how to update a model is an urgent problem to be solved.

### SUMMARY

The present disclosure provides a model updating method and device, which are conducive to ensuring performance of an updated model.

In a first aspect, a model updating method is provided and includes: determining, by a first device, a target updating mode of a first model in a plurality of updating modes based on first information and/or first indication information of a second device; where the first model is used to determine location related information of a terminal device, the first information includes performance parameter(s) of a model, the first indication information is used to indicate the target updating mode, and the plurality of updating modes include at least two of: a first updating mode indicating that a part of model parameters of the first model and/or a model structure of the first model is updated; a second updating mode indicating that the first model is updated to a second model; and a third updating mode indicating that the first model is updated to a third model, where the third model is obtained through training based on sample sets in a plurality of scenarios.

In a second aspect, a model updating method is provided, and includes: determining, by a first device, based on first information, whether to update a first model based on a target updating mode, where the first model is used to determine location related information of a terminal device, the first information includes performance parameter(s) of a model, and the target updating mode is one of: a first updating mode indicating that a part of model parameters of the first model and/or a model structure of the first model is updated; a second updating mode indicating that the first model is updated to a second model; and a third updating mode indicating that the first model is updated to a third model, where the third model is obtained through training based on sample sets in a plurality of scenarios.

In a third aspect, a terminal device is provided, and is configured to perform the method in the first aspect or in various implementations thereof.

Specifically, the terminal device includes a functional module configured to perform the method in the first aspect or in various implementations thereof.

In a fourth aspect, a network device is provided, and is configured to perform the method in the second aspect or in various implementations thereof.

Specifically, the network device includes a functional module configured to perform the method in the second aspect or in various implementations thereof.

In a fifth aspect, a terminal device is provided, and includes a processor and a memory. The memory is configured to store a computer program, and the processor is configured to call the computer program stored in the memory and run the computer program to perform the method in the first aspect or in various implementations thereof.

In a sixth aspect, a network device is provided, and includes a processor and a memory. The memory is configured to store a computer program, and the processor is configured to call the computer program stored in the memory and run the computer program to perform the method in the second aspect or in various implementations thereof.

In a seventh aspect, a chip is provided, and is configured to implement the method in any of the first aspect to the second aspect or in various implementations thereof.

Specifically, the chip includes a processor configured to call a computer program from a memory and run the computer program to enable a device equipped with the equipment to perform the method in any of the first aspect to the second aspect or in various implementations thereof.

In an eighth aspect, a computer-readable storage medium is provided, and is configured to store a computer program, where the computer program enables a computer to perform the method in any of the first aspect to the second aspect or in various implementations thereof.

In a ninth aspect, a computer program product is provided and includes computer program instructions, where the computer program instructions enable a computer to perform the method in any of the first aspect to the second aspect or in various implementations thereof.

In a tenth aspect, a computer program is provided. The computer program, when ran on a computer, enables the computer to perform the method in any of the first aspect to the second aspect or in various implementations thereof.

Through the above technical solution, the first device may select the target updating mode used for performing model updating in the plurality of updating modes according to the performance parameters of the model, or determine whether to perform the model updating using the target updating mode according to the performance parameters of the model, which is conducive to ensuring that the model updating is performed in an appropriate manner and ensuring the performance of the updated model.

### BRIEF DESCRIPTION OF THE DRAWINGS

FIG. 1 is a schematic diagram of an application scenario in accordance to embodiments of the present disclosure.
FIG. 2 is a schematic diagram of a neuron structure.
FIG. 3 is a schematic diagram of a neural network provided by the present disclosure.
FIG. 4 is a schematic diagram of a convolutional neural network provided by the present disclosure.
FIG. 5 is a schematic diagram of an LSTM unit provided by the present disclosure.
FIG. 6 is a schematic diagram of a positioning method in the related art.
FIG. 7 is a schematic diagram of another positioning technology in the related art.
FIG. 8 is a schematic diagram of a model-based positioning solution.
FIG. 9 is a schematic diagram of a model updating method in accordance to embodiments of the present disclosure.
FIG. 10 is a schematic diagram of another model updating method in accordance to embodiments of the present disclosure.
FIG. 11 is a schematic interaction diagram of a model updating method in accordance to an embodiment of the present disclosure.
FIG. 12 is a schematic interaction diagram of another model updating method in accordance to an embodiment of the present disclosure.
FIG. 13 is a schematic interaction diagram of another model updating method in accordance to an embodiment of the present disclosure.
FIG. 14 is a schematic interaction diagram of another model updating method in accordance to an embodiment of the present disclosure.
FIG. 15 is a schematic interaction diagram of another model updating method in accordance to an embodiment of the present disclosure.
FIG. 16 is a schematic interaction diagram of another model updating method in accordance to an embodiment of the present disclosure.
FIG. 17 is a schematic interaction diagram of another model updating method in accordance to an embodiment of the present disclosure.
FIG. 18 is a schematic block diagram of a communication device in accordance to embodiments of the present disclosure.
FIG. 19 is a schematic block diagram of another communication device in accordance to embodiments of the present disclosure.
FIG. 20 is a schematic block diagram of still another communication device in accordance to embodiments of the present disclosure.
FIG. 21 is a schematic block diagram of a chip in accordance to embodiments of the present disclosure.

### DETAILED DESCRIPTION

Technical solutions in the embodiments of the present disclosure will be described below with reference to the accompanying drawings in the embodiments of the present disclosure. Obviously, the described embodiments are merely some but not all of embodiments of the present disclosure. Based on the embodiments of the present disclosure, all other embodiments obtained by those ordinary skilled in the art without creative efforts shall fall within the protection scope of the present disclosure.

The technical solutions in the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (Non-Terrestrial Network, NTN) system, a universal mobile telecommunication system (UMTS), wireless local area networks (WLAN), wireless fidelity (Wi-Fi), a 5th-generation (5G) communication system or other communication systems.

Generally speaking, traditional communication systems support a limited quantity of connections, which is prone to implementation. However, with development of the communication technology, mobile communication systems will support not only traditional communication, but also, for example, device to device (D2D) communication, machine to machine (M2M) communication, machine type communication (MTC), vehicle to vehicle (V2V) communication, vehicle to everything (V2X) communication, or the like. The embodiments of the present disclosure may also be applied to these communication systems.

Optionally, the communication system in the embodiments of the present disclosure may be applied to a carrier aggregation (CA) scenario, a dual connectivity (DC) scenario, and also a standalone (SA) network deployment scenario.

Optionally, the communication system in the embodiments of the present disclosure may be applied to an unlicensed spectrum, and the unlicensed spectrum may also be considered as a shared spectrum. Alternatively, the communication system in the embodiments of the present disclosure may be applied to a licensed spectrum, and the licensed spectrum may be considered as an unshared spectrum.

In the embodiments of the present disclosure, various embodiments are described in combination with a network device and a terminal device, where the terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user device, or the like.

The terminal device may be a station (ST) in the WLAN, or may be a cellular phone, a cordless phone, a session initiation protocol (SIP) phone, a wireless local loop (WLL) station, a personal digital assistant (PDA) device, a handheld device with wireless communication functions, a computing device or other processing device connected to a wireless modem, an in-vehicle device, a wearable device, a terminal device in a next generation communication system (e.g., an NR network), a terminal device in a future evolved public land mobile network (PLMN), or the like.

In the embodiments of the present disclosure, the terminal device may be deployed on land, including indoor or outdoor, handheld, wearable or in-vehicle; alternatively, the terminal device may be deployed on water (e.g., on a steamship); alternatively, the terminal device may be deployed in air (e.g., on an airplane, on a balloon, or on a satellite).

In the embodiments of the present disclosure, the terminal device may be a mobile phone, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical, a wireless terminal device in a smart grid, a wireless terminal device in transportation safety, a wireless terminal device in a smart city, a wireless terminal device in a smart home, or the like.

As an example but not a limitation, in the embodiments of the present disclosure, the terminal device may also be a wearable device. The wearable device may be referred to as a wearable smart device, which is a general term for wearable devices developed by performing intellectualized design on daily wear (such as glasses, gloves, a watch, clothing, or shoes) using wearable technologies. The wearable device is a portable device that is worn directly on a body, or integrated into the clothes or accessories of users. The wearable device is not merely a hardware device, and implements powerful functions by software support as well as data interaction and cloud interaction. Generalized wearable smart devices include devices (such as a smart watch or smart glasses) that are fully functional, large in size and may implement full or partial functions without relying on smart phones, and devices (such as various smart bracelets or smart jewelries for monitoring physical signs) that only focus on a certain type of application function and need to be used in conjunction with other devices (such as a smart phone).

In the embodiments of the present disclosure, the network device may be a device for communicating with a mobile device. The network device may be an access point (AP) in the WLAN, a base station (Base Transceiver Station, BTS) in the GSM or CDMA, a base station (NodeB, NB) in the WCDMA, an evolutional base station (Evolutional Node B, eNB or eNodeB) in the LTE, a relay station or an access point, an in-vehicle device, a wearable device, a network device (gNB) in the NR network, a network device in the future evolved PLMN network, a network device in the NTN network, or the like.

As an example but not a limitation, in the embodiments of the present disclosure, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite, or the like. Optionally, the network device may also be a base station disposed on land, water, or the like.

In the embodiments of the present disclosure, the network device may provide a service for a cell, and the terminal device communicates with the network device through a transmission resource (e.g., a frequency-domain resource or a spectrum resource) used by the cell. The cell may be a cell corresponding to the network device (e.g., a base station), and the cell may belong to a macro base station, or may belong to a base station corresponding to a small cell. The small cell here may include a metro cell, a micro cell, a pico cell, a femto cell, or the like. These small cells have characteristics of a small coverage range and a low transmission power, which are applicable for providing a data transmission service with high speed.

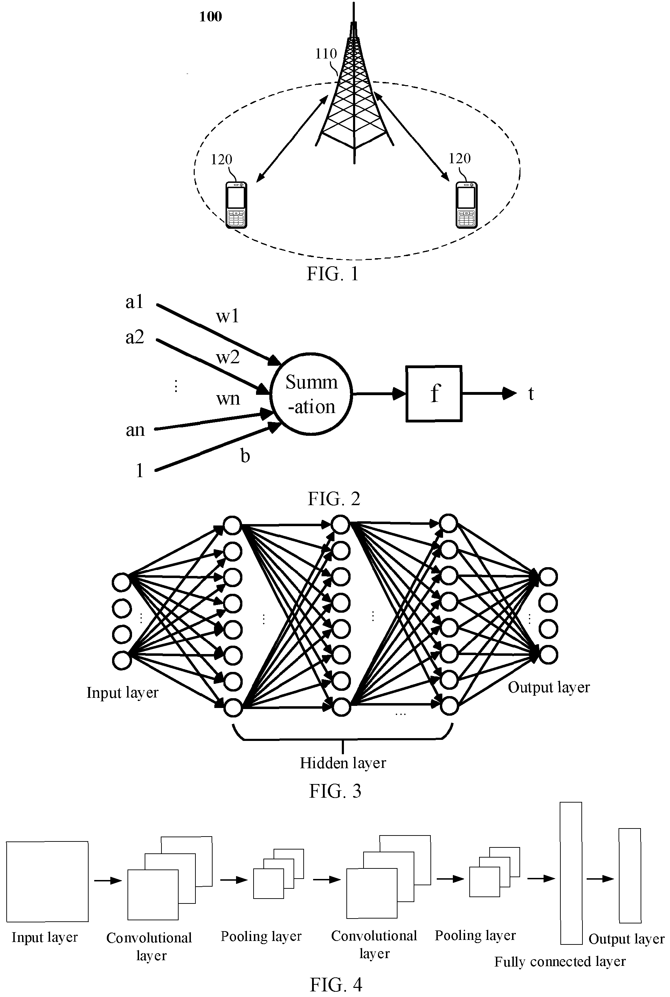

For example, a communication system 100 applied by the embodiments of the present disclosure is illustrated in FIG. 1. The communication system 100 may include a network device 110, and the network device 110 may be a device that communicates with terminal devices 120 (or referred to as communication terminals or terminals). The network device 110 may provide communication coverage for a specific geographical area and may communicate with the terminal devices located within the coverage area.

FIG. 1 exemplarily illustrates one network device and two terminal devices. Optionally, the communication system 100 may include a plurality of network devices, and there may be another number of terminal devices within the coverage range of each network device, which is not limited in the embodiments of the present disclosure.

Optionally, the communication system 100 may further include a network controller, a mobility management entity, and other network entities, which is not limited in the embodiments of the present disclosure.

It should be understood that in the embodiments of the present disclosure, a device with a communication function in the network/system may be referred to as a communication device. Taking the communication system 100 illustrated in FIG. 1 as an example, the communication devices may include a network device 110 with a communication function and a terminal device 120 with a communication function. The network device 110 and the terminal device 120 may be the specific devices described above, which will not be repeated here. The communication devices may further include other devices, such as a network controller, a mobile management entity, and other network entities, in the communication system 100, which is not limited in the embodiments of the present disclosure.

It should be understood that the terms "system" and "network" are often used interchangeably herein. The term "and/or" herein is only an association relationship to describe associated objects, indicating that there may be three kinds of relationships. For example, "A and/or B" may represent three cases: A alone, both A and B, and B alone. In addition, a character "/" herein generally indicates that the associated objects before and after this character are in an "or" relationship.

It should be understood that the term "indication" mentioned in the embodiments of the present disclosure may be a direct indication, an indirect indication, or an indication of an associated relationship. For example, A indicating B may mean that A directly indicates B, and for example, B may be obtained through A; alternatively, A indicating B may mean that A indirectly indicates B, and for example, A indicates C, and B may be obtained through C; alternatively, A indicating B may mean that there is an association relationship between A and B.

In the description of the embodiments of the present disclosure, the term "correspond" may mean that there is a direct correspondence or an indirect correspondence between the two, or may mean that there is an association relationship between the two, or may mean a relationship of indicating and being indicated, or a relationship of configuring and being configured, or the like.

In the embodiments of the present disclosure, the term "predefined" may be implemented by pre-saving corresponding codes, tables or other manners that may be used to indicate related information in the device (e.g., including the terminal device and the network device), and the present disclosure does not limit its the specific implementation. For example, the predefinition may refer to predefinition in a protocol.

In the embodiments of the present disclosure, the term "protocol" may refer to a standard protocol in the communication field, for example, the "protocol" may include an LTE protocol, an NR protocol, or related protocols applied in future communication systems, which will not be limited in the present disclosure.

In order to well understand the embodiments of the present disclosure, neural networks related to the present disclosure will be described.

A neural network is a computing model consisting of a plurality of interconnected neuron nodes, where connection between the nodes represents a weighting value from an input signal to an output signal, and the weighting value is called a weighting factor; and each node performs weighted summation (SUM) on different input signals and outputs a result of the weighted summation through a specific activation function (f). FIG. 2 is a schematic diagram of a neuron structure, where a1, a2, ..., and an denote input signals, w1, w2, ..., and wn donate weighting factors, f donates the activation function, and t denotes an output.

A simple neural network is illustrated in FIG. 3, and includes an input layer, hidden layers and an output layer. Different outputs may be generated through different connection modes, weighting factors and activation functions of a plurality of neurons, so as to fit mapping relationships from input to output. Each upper-level node is connected to all lower-level nodes, and this neural network is a fully connected neural network, which may also be called a deep neural network (DNN).

Deep learning uses a deep neural network with a plurality of hidden layers, which greatly improves an ability of a network to learn features and may fit complex nonlinear mappings from input to output. Therefore, it is widely used in speech and image processing fields. In addition to the deep neural network, for different tasks, deep learning further includes common basic structures, such as a convolutional neural network (CNN) and a recurrent neural network (RNN).

A basic structure of a convolutional neural network includes an input layer, a plurality of convolutional layers, a plurality of pooling layers, a fully connected layer and an output layer, as illustrated in FIG 4. Each neuron of a convolution kernel in a convolutional layer is locally connected to its input, and a pooling layer is introduced to extract a local maximum or average feature of a layer, which effectively reduces parameters of the network and mines local features, so that the convolutional neural network may converge quickly and obtain excellent performance.

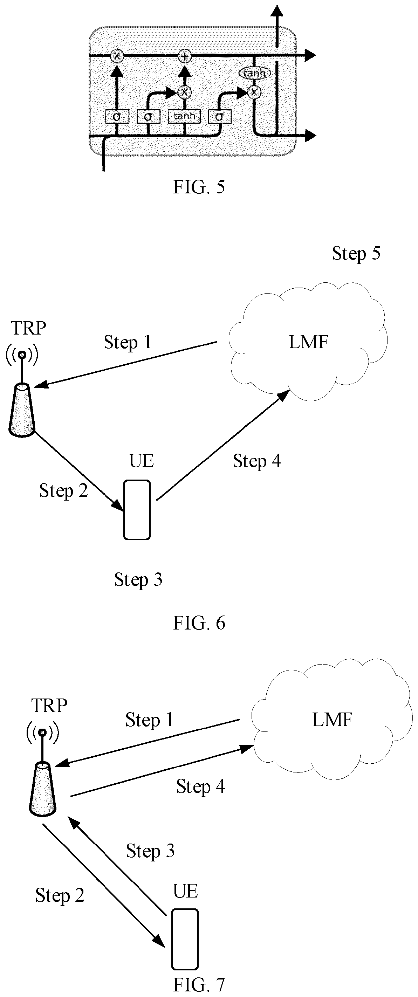

The RNN is a neural network that models sequential data, and has achieved remarkable results in a natural language processing domain, such as machine translation and speech recognition. Specifically, the network memorizes information from the past and uses the information in calculation of the current output, that is, nodes between the hidden layers are no longer disconnected but connected, and the input of the hidden layers includes not only the input layer but also the output of the hidden layers at the previous moment. Commonly used RNNs include structures such as a long short-term memory (LSTM) and a gated recurrent unit (GRU). FIG. 5 illustrates a basic LSTM unit structure, which may include a tanh activation function. Unlike the RNN, which only considers a most recent state, a cell state of the LSTM determines which states should be retained and which states should be forgotten, so as to solve defects of a traditional RNN in long-term memory.

In order to well understand the embodiments of the present disclosure, positioning methods related to the present disclosure will be described.

In the related art, positioning methods may be divided into the following categories.

UE-based positioning method: a terminal directly calculates a location of a target UE.

UE-assisted positioning method/location management function (LMF)-based positioning method: a terminal reports measurement results to the LMF, and the LMF calculates a location of a target UE based on the collected measurement results.

Network node assisted (e.g. NG-RAN node assisted) positioning method: a base station reports measurement results of a transmission/reception point (TRP) to the LMF, and the LMF calculates a location of a target UE based on the collected measurement results.

In traditional positioning methods, for different method, the UE or the LMF uses traditional algorithms, such as Chan algorithm, Taylor expansion and other algorithms, to estimate the location of the target UE.

For supporting various positioning methods, a positioning reference signal (PRS) is introduced in a downlink, and a sounding reference signal (SRS) for positioning is introduced in an uplink.

An NR-based positioning function mainly involves three parts: a terminal (UE), a plurality of TRPs, and a location server. The plurality of TRPs around the terminal participate in cellular positioning, a base station may be a TRP, or a base station may have multiple TRPs. The location server is responsible for a positioning process. The positioning server may include a LMF.

Downlink-based positioning methods may be divided into two categories.

### 1. Terminal-assisted (UE-assisted) positioning method

The UE is responsible for positioning-related measurements, and a network calculates location information according to measurement results reported by the UE.

### 2. UE-based positioning method

The UE performs positioning-related measurements and calculates location information based on measurement results.

A downlink-based positioning method (e.g., a terminal-assisted (UE-assisted) positioning method) is taken as an example below to illustrate a basic positioning process, which is illustrated in FIG. 6.

In step 1: a location server notifies TRP-related configurations.

The TRP-related configurations may include configuration information of the PRS and/or a type of the measurement result that the terminal needs to report, or the like.

In step 2: the TRP transmits the PRS.

In step 3: the terminal receives the PRS and performs measurement.

The measurement results required by the terminal may be different based on different positioning methods.

In step 4: the terminal may feed back the measurement results to the location server.

For example, the terminal feeds back the measurement results to the location server through the base station.

In step 5: the location server calculates location related information.

The above is an illustration of an execution process of the UE-assisted positioning method. For the terminal-based (UE-based) positioning method, the terminal directly calculates the location related information based on the measurement results in the step 4, without the need to report the measurement results to the location server and then perform the calculation by the location server. With the UE-based positioning method, the terminal needs to know location information corresponding to the TRP, so the network needs to notify the UE of the location information corresponding to the TRP in advance.

An uplink-based positioning method is taken as an example below to illustrate a basic process, as illustrated in FIG. 7, which may include the following steps.

In step 1: a location server notifies TRP-related configurations.

In step 2: a base station transmits related signaling to a terminal.

In step 3: the terminal transmits, according to related training, an uplink signal, such as SRS for positioning.

In step 4: the TRP measures the SPS for positioning and transmits measurement results to the location server.

In step 5: the location server calculates location related information.

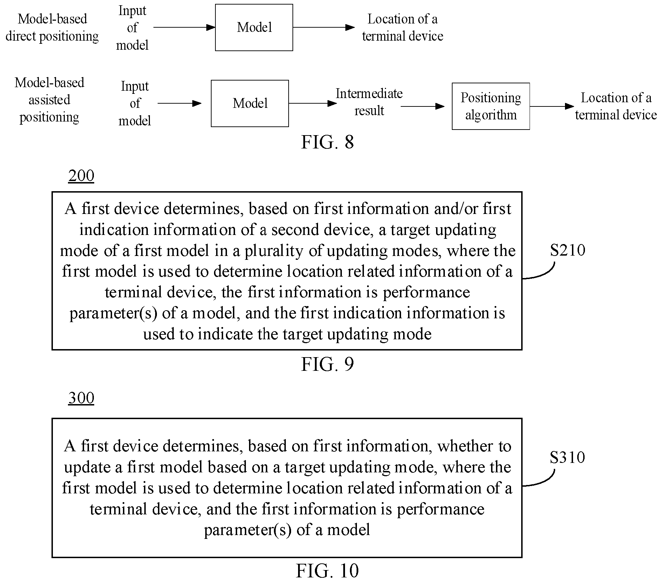

The model may be combined with any positioning method to replace traditional algorithms and be used to estimate a location of the terminal device, so as to improve the positioning accuracy. The model may be deployed on a UE side or on an LMF side, or on both the UE side and the LMF side. The positioning method combined with the model may be divided into a model-based direct positioning method and a model-based assisted positioning method. As illustrated in FIG. 8, for the model-based direct positioning method, the location of the terminal device is determined directly based on input information; and for the model-based assisted positioning method, an intermediate result is determined based on input information, and the location of the terminal device is further determined according to a positioning algorithm.

In generalization study of a model, the model is trained by collecting data in specific scenarios and specific configuration parameters. If the trained model is applied to other scenarios or configuration parameters, the positioning accuracy will drop significantly. In this case, in order to ensure a certain positioning accuracy, the model needs to be updated. In this case, how to update the model to ensure model performance is an urgent problem to be solved.

To facilitate understanding of the technical solutions in the embodiments of the present disclosure, the technical solutions of the present disclosure are described in detail below through specific embodiments. The above related arts, as optional solutions, may be arbitrarily combined with the technical solutions in the embodiments of the present disclosure, and those combined solutions all fall within the protection scope of the embodiments of the present disclosure. The embodiments of the present disclosure include at least part of the following contents.

FIG. 9 is a schematic diagram of a model updating method 200 according to the embodiments of the present disclosure. As illustrated in FIG. 9, the method 200 includes the following contents.

In S210, a first device determines, based on first information and/or first indication information of a second device, a target updating mode of a first model in a plurality of updating modes, where the first indication information is used to indicate the target updating mode.

In some embodiments, the first model is deployed on the first device.

In some embodiments, the first device may be a terminal device, or may be a network device, such as a base station, a TRP, or an LMF.

In some embodiments, the first model is used to determine location related information of the terminal device.

For example, the first model is used to determine location information of the terminal device, or may also be used to determine intermediate information of the location information of the terminal device. That is, the first model may be used for direct positioning of the terminal device, or may also be used for assisted positioning of the terminal device.

In some embodiments, the intermediate information of the location information of the terminal device may include, but is not limited to, one or more of the following:
time of arrival (ToA), downlink time difference of arrival (DL TDOA), downlink angle of departure (DL AoD), reference signal receiving power (RSRP), DL reference signal time difference (DL RSTD), line of sight/non-line of sight identification (LOS/NLOS identification), uplink time difference of arrival (UL TDOA), uplink angle of arrival (UL AoD), RSRP, UL relative time of arrival (UL RTOA), and distance information between a terminal device and a network device. Optionally, the network device may be a base station, and the base station may have one or more TRPs. Optionally, the distance information between the terminal device and the network device may refer to intermediate information between the terminal device and one or more TRPs.

In some embodiments, the first device may obtain input information of the model, where the input information of the model may be a measurement result of a reference signal, such as a measurement result of a PRS or a measurement result of an SRS used for positioning.

In some embodiments, the input information of the model may be measured by the first device, or may be obtained from the second device.

For example, the terminal device is a deployment end of the first model, and the terminal device may measure the PRS to obtain a measurement result of the PRS as the input of the model, or may also obtain a measurement result of the SRS from the network device as the input of the model.

As another example, the network device is a deployment end of the first model, and the network device may measure the SRS to obtain a measurement result of the SRS as the input of the model, or may also obtain a measurement result of the PRS from the terminal device as the input of the model.

It should be understood that the present disclosure does not limit specific types of the first model and the updated model. For example, the specific types of the first model and the updated model may be artificial intelligence (AI) models, such as CNN models and RNN models, or may be machine learning models.

In some embodiments, the plurality of updating modes include at least two of:
a first updating mode, indicating that at least one of a part of model parameters, a model structure, and a weight coefficient of the first model is updated;
a second updating mode, indicating that the first model is updated to a second model;
a third updating mode, indicating that the first model is updated to a third model, where the third model is obtained through training based on sample sets in a plurality of scenarios.

In some embodiments, the first updating mode may be understood as fine-tuning the model (model fine-tuning).

For example, the first updating mode may include tuning the first model using a small amount of sample data. For example, the tuning may include, but is not limited to, fine-tuning the model parameters and/or the model structure of the first model.

In some embodiments, the second updating mode may be understood as switching the model (model switching).

For example, the second updating mode may include replacing the first model with a new model trained by using a large amount of collected sample data.

Optionally, the first model and the second model may be trained based on sample sets in different scenarios or parameter configurations.

For example, the first model may be obtained through training based on a sample set in a first scenario, and the second model may be obtained through training based on a sample set in a second scenario.

In some embodiments, the third updating mode may be understood as switching the model to a specific model, where the specific model is obtained through training based on sample sets in a plurality of scenarios or parameter configurations. In other words, the updated model may be adapted to a variety of scenarios or parameter configurations and has good generalization performance.

In some embodiments, the first information includes performance parameter(s) of the model.

As an example but not a limitation, the first information includes at least one of the following performance parameters:
model complexity, computational complexity of the model, a positioning accuracy of the model, updating duration of the model, and the number of samples required for training an updated model.

In some embodiments, the model complexity includes, but is not limited to, the number of model parameters and/or complexity of the model structure, such as the number of layers of the model.

In some embodiments, the computational complexity of the model includes complexity of performing floating point operations (FLOPs) by the model.

In some embodiments, the positioning accuracy of the model may be error between location related information of the terminal device determined according to the output of the model and actual location related information of the terminal device, or distribution of the location related information of the terminal device.

In some specific embodiments, the positioning accuracy may be error between predicted location information and actual location information of the terminal device, or distribution of the predicted location information of the terminal device.

Optionally, output information of the model is location information of the terminal device, and the predicted location information of the terminal device may be the output information of the model, which corresponds to the model-based direct positioning scenario.

Optionally, the output information of the model is intermediate information of the location information of the terminal device, and the predicted location information of the terminal device may be obtained by further calculating based on the output information of the model, which corresponds to the model-based assisted positioning scenario.

In other specific embodiments, the positioning accuracy may also be error between intermediate information of the predicted location information of the terminal device and intermediate information of the actual location information of the terminal device, or distribution of the intermediate information of the predicted location information of the terminal device, or distribution of the error between the intermediate information of the predicted location information of the terminal device and the intermediate information of actual location information of the terminal device.

For example, the output information of the model is the intermediate information of the location information of the terminal device, such as the distance information between the terminal device and the network device. In this case, the positioning accuracy may be error between the distance information between the terminal device and the network device predicted by the model and actual distance information between the terminal device and the network device.

In some embodiments, the first model is deployed on a terminal device side, and the actual location information of the terminal device may be obtained by the terminal device from the LMF. Alternatively, the first model is deployed on a network device side, and the actual location information of the terminal device may be obtained by the network device from the terminal device or from the LMF.

In some embodiments, the updating duration of the model includes time required for training an updated model, or includes time required for model fine-tuning.

For the first updating mode, only the first model needs to be fine-tuned, so required updating duration is shorter. For the second updating mode, the model needs to be trained based on a large amount of samples, so the required updating duration is longer. For the third updating mode, the model needs to be trained based on sample sets in a plurality of scenarios, so the required updating duration is the longest.

In some embodiments, the number of samples required for training the updated model in the first updating mode includes the number of samples required for obtaining the updated model by fine-tuning the first model.

In some embodiments, the number of samples required for training the updated model in the second updating mode includes the number of samples required for training the second model.

In some embodiments, the number of samples required for training the updated model in the third updating mode includes the number of samples required for training the third model.

In some embodiments of the present disclosure, the S210 may include:
determining an updating mode of which at least one of model complexity corresponding to the updated model, computational complexity corresponding to the updated model, a positioning accuracy corresponding to the updated model, updating duration corresponding to the updated model, and the number of samples required for training an updated model corresponding to the updated model meets a preset condition as a target updating mode of the first model.

That is, the performance parameter of the model updated based on the target updating mode needs to meet at least one of the following conditions:
the model complexity meeting a preset condition;
the computational complexity of the model meeting a preset condition;
the positioning accuracy of the model meeting a preset condition;
the updating duration of the model meeting a preset condition; and
the number of samples required for training the updated model meeting a preset condition.

It should be noted that in a case where the first device selects a target updating mode based on a plurality of performance parameters, the present disclosure does not limit an order in which the plurality of performance parameters are used.

In some embodiments, determining the updating mode of which at least one of the model complexity, the computational complexity of the model, the positioning accuracy of the model, the updating duration of the model, and the number of samples required for training the updated model meets the preset condition as the target updating mode of the first model, includes:
in a case where all of positioning accuracies of the model updated based on the plurality of updating modes meet the preset condition, determining an updating mode of which the at least one of the model complexity corresponding to the updated model, the computational complexity of the model corresponding to the updated model, the updating duration of the model corresponding to the updated model, and the number of samples required for training the updated model corresponding to the updated model meets the preset condition as the target updating mode of the first model.

That is, in a case where all of the positioning accuracies of the model updated based on the plurality of updating modes meet the preset condition, the terminal device may select the target updating mode according to other performance parameters of the model.

In a specific embodiment, the terminal device first selects, according to the positioning accuracies of the model updated based on the plurality of updating modes, updating mode(s) of which a positioning accuracy meets the preset condition, and further selects a target updating mode from the updating mode(s) of which the positioning accuracy meets the preset condition. For example, if a positioning accuracy of the model updated by only one updating mode meets the preset condition, this updating mode may be determined as the target updating mode; alternatively, if several positioning accuracies of the model updated by a plurality of updating modes meet the preset condition, the target updating mode may be selected from the plurality of updating modes in combination with other performance parameters of the model.

In some embodiments, the first indication information is used to indicate a target updating mode. For example, the first indication information is used to indicate an index of the target updating mode or an identity (ID) of the target updating mode.

In some embodiments, the first device is the terminal device, and the terminal device may receive first indication information transmitted from a network device, where the first indication information is used to indicate the target updating mode. In this case, the terminal device may determine the target updating mode according to an indication of the network device. For example, in a case where the target updating mode indicated by the first indication information is the first updating mode, the first model may be updated based on the first updating mode; alternatively, in a case where the target updating mode indicated by the first indication information is the second updating mode, the first model may be updated based on the second updating mode; alternatively, in a case where the target updating mode indicated by the first indication information is the third updating mode, the first model may be updated based on the third updating mode.

Optionally, the network device is a base station, and the first indication information may be transmitted via downlink signaling, such as radio resource control (RRC) signaling.

Optionally, the network device is an LMF, and the first indication information may be signaling transmitted through an LTE positioning protocol (LPP).

In some other embodiments, the terminal device may determine the target updating mode based on the first indication information and the first information.

For example, in a case where the performance parameter of the model updated based on the target updating mode indicated by the first indication information meets at least one of the above conditions, the terminal device determines to update the first model based on the target updating mode.

As an example, if the first indication information indicates the first updating mode, then in a case where at least one of model complexity corresponding to the model updated based on the first updating mode, computational complexity corresponding to the model updated based on the first updating mode, a positioning accuracy corresponding to the model updated based on the first updating mode, updating duration corresponding to the model updated based on the first updating mode, and the number of samples required for training the updated model corresponding to the model updated based on the first updating mode meets the preset condition, it is determined to update the first model based on the first updating mode.

As another example, if the first indication information indicates the second updating mode, in a case where at least one of model complexity corresponding to the model updated based on the second updating mode, computational complexity corresponding to the model updated based on the second updating mode, a positioning accuracy corresponding to the model updated based on the second updating mode, updating duration corresponding to the model updated based on the second updating mode, and the number of samples required for training the updated model corresponding to the model updated based on the second updating mode meets the preset condition, it is determined to update the first model based on the second updating mode; or
as another example, if the first indication information indicates the third updating mode, in a case where at least one of model complexity corresponding to the model updated based on the third updating mode, computational complexity corresponding to the model updated based on the third updating mode, a positioning accuracy corresponding to the model updated based on the third updating mode, updating duration corresponding to the model updated based on the third updating mode, and the number of samples required for training the updated model corresponding to the model updated based on the third updating mode meets the preset condition, it is determined to update the first model based on the third updating mode.

In some embodiments, the model complexity meeting the preset condition includes:
the model complexity corresponding to the model updated based on the target updating mode in the plurality of update modes being the lowest; and/or
the model complexity corresponding to the model updated based on the target updating mode being less than a first model complexity threshold.

Optionally, the first model complexity threshold may be a threshold for the number of model parameters.

In some embodiments, the first device is the terminal device, and the first model complexity threshold may be predefined, preconfigured, determined by the terminal device itself, or configured by the network device.

In some other embodiments, the first device is the network device, and the first model complexity threshold may be predefined or determined by the network device.

In some embodiments, the computational complexity of the model meeting the preset condition includes:
the computational complexity corresponding to the model updated based on the target updating mode in the plurality of update modes being the lowest; and/or
the computational complexity corresponding to the model updated based on the target updating mode being less than a first computational complexity threshold.

In some embodiments, the first device is the terminal device, and the first computational complexity threshold may be predefined, preconfigured, determined by the terminal device itself, or configured by the network device.

In some other embodiments, the first device is the network device, and the first computational complexity threshold may be predefined or determined by the network device.

In some embodiments, the positioning accuracy of the model meeting the preset condition includes at least one of:
the positioning accuracy of the model updated based on the target updating mode reaching a first positioning accuracy;
the positioning accuracy of the model updated based on the target updating mode being higher than a positioning accuracy of the model before updating, which indicates that the positioning accuracy of the updated model is improved relative to the positioning accuracy of the model before updating; and
an improvement amount of the positioning accuracy of the model updated based on the target updating mode relative to the positioning accuracy of the model before updating reaching a first positioning accuracy improvement amount, which indicates that the improvement amount of the positioning accuracy of the updated model relative to the positioning accuracy of the model before updating meets the preset condition.

Optionally, the first positioning accuracy may be in units of meters, in units of centimeters, or in units of millimeters, which is not limited in the present disclosure.

Optionally, the first positioning accuracy improvement amount may be in units of meters, or in units of centimeters, or in units of millimeters, which is not limited in the present disclosure.

In some embodiments, the first device is the terminal device, and the first positioning accuracy may be predefined, preconfigured, determined by the terminal device itself, or configured by the network device.

In some other embodiments, the first device is the network device, and the first positioning accuracy may be predefined or determined by the network device.

In some embodiments, the first device is the terminal device, and the first positioning accuracy improvement amount may be predefined, preconfigured, determined by the terminal device itself, or configured by the network device.

In some other embodiments, the first device is the network device, and the first positioning accuracy improvement amount may be predefined or determined by the network device.

In some embodiments, the updating duration of the model meeting the preset condition includes:
the updating duration corresponding to the model updated based on the target updating mode in the plurality of updating modes being the shortest; and/or
the updating duration corresponding to the model updated based on the target updating mode being less than a first duration threshold.

In some embodiments, the first device is the terminal device, and the first duration threshold may be predefined, preconfigured, determined by the terminal device itself, or configured by the network device.

In some other embodiments, the first device is the network device, and the first duration threshold may be predefined or determined by the network device.

In some embodiments, the number of samples required for training the updated model meeting the preset condition includes:
the number of samples required for training the model updated based on the target updating mode in the plurality of updating modes being smallest; and/or
the number of samples required for training the model updated based on the target updating mode being smaller than a first sample number threshold.

In some embodiments, the first device is the terminal device, and the first sample number threshold may be predefined, preconfigured, determined by the terminal device itself, or configured by the network device.

In some other embodiments, the first device is the network device, and the first sample number threshold may be predefined or determined by the network device.

Model updating modes according to the embodiments of the present disclosure will be described below in conjunction with specific examples.

Example 1: the first information includes the model complexity, the computational complexity of the model, and the positioning accuracy of the model.

In a case where positioning accuracies of the model updated based on the plurality of updating modes reach the first positioning accuracy or improvement amounts of the positioning accuracies relative to the positioning accuracy of the model before updating reach the first positioning accuracy improvement amount, the first device may select an updating mode with the lowest model complexity and/or the lowest computational complexity as the target updating mode.

Since the model complexity and the computational complexity will affect difficulty and time of model training, in a case where positioning accuracies of the model updated based on the plurality of updating modes meet a positioning accuracy threshold or the improvement amounts of the positioning accuracies reach the positioning accuracy improvement amount threshold, an updating mode with the lowest complexity is selected to perform the model updating, which is conducive to reducing the difficulty of the model training.

Example 2: the first information includes the updating duration of the model and the positioning accuracy of the model.

In a case where positioning accuracies of the model updated based on the plurality of updating modes reach the first positioning accuracy or improvement amounts of the positioning accuracies relative to the positioning accuracy of the model before updating reach the first positioning accuracy improvement amount, the first device may select an updating mode with the shortest updating duration of the model as the target updating mode.

The updating duration of the model is an important indicator for determining the difficulty and the time of the model training. In a case where positioning accuracies of the model updated based on the plurality of updating modes meet the positioning accuracy threshold or the improvement amounts of the positioning accuracies reach the positioning accuracy improvement amount threshold, an updating mode with the shortest updating duration is selected to perform the model updating, which is conducive to reducing the difficulty of the model training.

Example 3: the first information includes the updating duration of the model, the positioning accuracy of the model, and the number of samples required for training the updated model.

In a case where positioning accuracies of the model updated based on the plurality of updating modes reach the first positioning accuracy or improvement amounts of the positioning accuracies relative to the positioning accuracy of the model before updating reach the first positioning accuracy improvement amount, the first device may select an updating mode of which the updating duration of the model is lower than the first duration threshold and/or the number of samples required for training the updated model is smaller than the first sample number threshold as the target updating mode.

Optionally, if there are a plurality of updating modes meeting that the updating duration of the model is less than a first duration threshold, and/or that the number of samples required for training the updated model is smaller than the first sample number threshold, an updating mode with the shortest updating duration of the model and/or the lowest number of samples required for training the updated model is taken as the target updating mode.

The updating duration of the model is an important indicator for determining the difficulty and the time of the model training. The number of samples required for training the model needs to be temporarily collected in a new scenario or a new configuration parameter, which may increase the difficulty of model updating. The more number of samples there are, the more difficult to perform updating. In a case where the positioning accuracy threshold is met or the improvement amount of the positioning accuracy reaches the positioning accuracy improvement amount threshold, the updating duration of the model and the number of samples required for training a new model are considered comprehensively, which is conducive to reducing the difficulty of the model training and to selecting the optimal updating mode.

Example 4: the first information includes the computational complexity, the positioning accuracy, and the number of samples required for training the updated model.

In a case where positioning accuracies of the model updated based on the plurality of updating modes reach the first positioning accuracy or the improvement amounts of the positioning accuracies relative to the positioning accuracy of the model before updating reach the first positioning accuracy improvement amount, the first device may select an updating mode of which computational complexity is lower than the first computational complexity threshold, and/or the number of samples required for training the updated model is smaller than the first sample number threshold.

Optionally, if there are a plurality of updating modes meeting that the computational complexity is lower than the first computational complexity threshold, and/or that the number of samples required for training the updated model is smaller than the first sample number threshold, an updating mode with the lowest computational complexity and/or with the smallest number of samples required for training the updated model is adopted.

In a case where positioning accuracies of the model updated based on the plurality of updating modes meet a positioning accuracy threshold or the improvement amounts of the positioning accuracies reach the positioning accuracy improvement amount threshold, the computational complexity and the number of samples required for training the updated model are considered comprehensively to select the target updating mode, which is conducive to reducing the difficulty of model training and to selecting the optimal updating mode.

Example 5: the first information includes the model complexity, the positioning accuracy, and the number of samples required for training the updated model.

In a case where positioning accuracies of the model updated based on the plurality of updating modes reach the first positioning accuracy or the improvement amounts of the positioning accuracies relative to the positioning accuracy of the model before updating reach the first positioning accuracy improvement amount, the first device may select an updating mode of which the model complexity is lower than a first model complexity threshold, and/or the number of samples required for training the updated model is smaller than a first sample number threshold.

Optionally, if there are a plurality of updating modes meeting that the model complexity is lower than the first model complexity threshold, and/or that the number of samples required for training the updated model is smaller than the first sample number threshold, an updating mode with the lowest model complexity and/or with the smallest number of samples required for training the updated model is adopted.

In a case where positioning accuracies of the model updated based on the plurality of updating modes meet a positioning accuracy threshold or the improvement amounts of the positioning accuracies reach the positioning accuracy improvement amount threshold, the model complexity and the number of samples required for training the updated model are considered comprehensively to select the target updating mode, which is conducive to reducing the difficulty of model training and to selecting the optimal updating mode.

Methods for determining the positioning accuracy of the mode will be described below in conjunction with specific embodiments.

In some embodiments, the method 200 further includes:
determining, based on predicted location information of the terminal device (or estimated location information of the terminal device) and actual location information of the terminal device, a respective positioning accuracy of the model updated based on each updating mode of the plurality of updating modes.

In case 1: the predicted location information of the terminal device is output information of the updated model, which corresponds to a model-based direct positioning scenario.

In case 2: the predicted location information of the terminal device is determined based on the output information of the updated model, and the output information of the updated model is intermediate information of the location information of the terminal device, which corresponds to a model-based assisted positioning scenario.

In this case, a first device may transmit the intermediate information of the location information of the terminal device output by the model to a second device, and the second device estimates the location information of the terminal device based on the intermediate information, and further sends the estimated location information of the terminal device to the first device.

In some embodiments, the first device is the terminal device and the second device is the network device.

In some other embodiments, the first device is a first network device, and the second device is a second network device. For example, the first network device is a TRP, and the second network device is an LMF.

In some embodiments, the method 200 further includes:
determining, based on predicted intermediate information of location information of the terminal device and actual intermediate information of location information of the terminal device, a positioning accuracy of the updated model, where the predicted intermediate information is output information of the updated model, and the predicted intermediate information is used to determine predicted location information of the terminal device.

For example, the output information of the model is intermediate information of the location information of the terminal device, such as distance information between the terminal device and the network device. In this case, the positioning accuracy may be error between distance information between the terminal device and the network device predicted by the model and actual distance information between the terminal device and the network device.

In some embodiments, in a case where the output information of the model updated based on the plurality of updating modes is the intermediate information of the location information of the terminal device, the method 200 further includes:
transmitting, by the first device, the intermediate information of the location information of the terminal device to the second device; and
receiving, by the first device, second information transmitted from the second device, where the second information includes the location information of the terminal device predicted by the second device based on the intermediate information.

In some embodiments, the first device is the terminal device, and the method 200 further includes:
transmitting, by the terminal device, a first request message to a network device for requesting updating of the first model; and
receiving, by the terminal device, second indication information transmitted from the network device for indicating updating of the first model.

That is, in a case where the terminal device determines that the model updating is required, the terminal device may request the model updating from the network device, and further perform the model updating based on an indication of the network device. Optionally, the network device may be the base station, the TRP or the LMF.

In some embodiments, the first device is the terminal device, and the method 200 further includes:
transmitting, by the terminal device, third indication information to a network device, where the third indication information is used to indicate that the first model has been updated.

That is, after the terminal device has updated the model, the terminal device may notify the network device, which is beneficial for the network device to understand status of the model on the terminal device side to send positioning-related configuration information corresponding to the updated model.

In summary, in the embodiments of the present disclosure, the terminal device or the network device may select the target updating mode used for the model updating based on the performance parameter of the model, which is conducive to ensuring performance of the updated model. For example, in a case where the positioning accuracy of the model is ensured, an updating mode with low model complexity or low computational complexity or short updating duration is selected, which is conducive to reducing the difficulty of the model training.

FIG. 10 is a schematic diagram of another model updating method 300 according to the embodiments of the present disclosure. As illustrated in FIG. 10, the method 300 includes the following contents.

In S310, a first device determines, based on first information, whether to update a first model based on a target updating mode.

In some embodiments, the target updating mode is one of:
a first updating mode, indicating that at least one of a part of model parameters, a model structure, and a weight coefficient of the first model is updated;
a second updating mode, indicating that the first model is updated to a second model;
a third updating mode, indicating that the first model is updated to a third model, where the third model is obtained through training based on sample sets in a plurality of scenarios.

It should be understood that for specific implementations of the first updating mode, the second updating mode, the third updating mode, and the first information, reference may be made to the related description in the method 200, and details are not repeated here for the sake of brevity.

In some embodiments, the first model is deployed on the first device.

In some embodiments, the first device may be a terminal device, or may be a network device, such as a base station, a TRP, or an LMF.

In some embodiments, the first model is used to determine location related information of the terminal device.

For example, the first model is used to determine the location information of the terminal device, or may also be used to determine intermediate information of the location information of the terminal device. That is, the first model may be used for direct positioning of the terminal device, or may also be used for assisted positioning of the terminal device.

In some embodiments, the intermediate information of the location information of the terminal device may include, but is not limited to, distance information between the terminal device and the network device. Optionally, the network device may be the base station, and the base station may have one or more TRPs. Optionally, the distance information between the terminal device and the network device may refer to distance information between the terminal device and one or more TRPs.

In some embodiments, the first device may obtain input information of the model, where the input information of the model may be a measurement result of a reference signal, such as a measurement result of a PRS or a measurement result of an SRS used for positioning.

In some embodiments, the input information of the model may be measured by the first device, or may be obtained from the second device.

For example, the terminal device is a deployment end of the first model, and the terminal device may measure the PRS to obtain a measurement result of the PRS as the input of the model, or may also obtain a measurement result of the SRS from the network device as the input of the model.

As another example, the network device is a deployment end of the first model, and the network device may measure the SRS to obtain a measurement result of the SRS as the input of the model, or may also obtain a measurement result of the PRS from the terminal device as the input of the model.

In some embodiments, in a case where the first device determines not to perform the model updating based on the target updating mode, the first device may fall back to position the terminal device using a traditional positioning method. For example, the location of the terminal device is estimated based on Chan algorithm, Taylor expansion or other algorithms.

It should be understood that the present disclosure does not limit specific types of the first model and the updated model. For example, the specific types of the first model and the updated model may be artificial intelligence (AI) models, such as CNN models, and RNN models, or may be machine learning models.

In some embodiments, the S310 may include:
in a case where at least one of model complexity corresponding to a model updated based on the target updating mode, computational complexity corresponding to a model updated based on the target updating mode, a positioning accuracy corresponding to a model updated based on the target updating mode, updating duration corresponding to a model updated based on the target updating mode, and the number of samples required for training an updated model corresponding to a model updated based on the target updating mode meets a preset condition, determining to update the first model based on the target updating mode.

That is, in a case where the performance parameter of the model updated based on the target updating mode needs to meet at least one of the following conditions, the first model is updated using the target updating mode:
the model complexity meeting the preset condition;
the computational complexity of the model meeting the preset condition;
the positioning accuracy of the model meeting the preset condition;
the updating duration of the model meeting the preset condition; and
the number of samples required for training the updated model meeting the preset condition.

In some embodiments, in a case where all of the positioning accuracies of the model updated based on the plurality of updating modes meet the preset condition, the updating mode of which the at least one of the model complexity corresponding to the updated model, the computational complexity of the model corresponding to the updated model, the updating duration of the model corresponding to the updated model, and the number of samples required for training the updated model corresponding to the updated model meets the preset condition is determined as the target updating mode of the first model.

That is to say, in a case where the positioning accuracy of the model updated based on the target updating mode meet the preset condition, whether to update the first model based on the target updating mode is determined according to other performance parameters of the model updated based on the target updating mode.

In some embodiments, the model complexity meeting the preset condition includes:
the model complexity corresponding to the model updated based on the target updating mode being less than a first model complexity threshold.

Optionally, the first model complexity threshold may be a threshold for the number of model parameters.

In some embodiments, the first device is the terminal device, and the first model complexity threshold may be predefined, preconfigured, determined by the terminal device itself, or configured by the network device.

In some other embodiments, the first device is the network device, and the first model complexity threshold may be predefined or determined by the network device.

In some embodiments, the computational complexity of the model meeting the preset condition includes:
the computational complexity corresponding to the model updated based on the target updating mode being less than a first computational complexity threshold.

In some embodiments, the first device is the terminal device, and the first computational complexity threshold may be predefined, preconfigured, determined by the terminal device itself, or configured by the network device.

In some other embodiments, the first device is the network device, and the first computational complexity threshold may be predefined or determined by the network device.

In some embodiments, the positioning accuracy of the model meeting the preset condition includes at least one of:
the positioning accuracy of the model updated based on the target updating mode reaching first positioning accuracy;
the positioning accuracy of the model updated based on the target updating mode being higher than the positioning accuracy of the model before updating, which indicates that the positioning accuracy of the updated model is improved relative to the positioning accuracy of the model before updating; and
an improvement amount of the positioning accuracy of the model updated based on the target updating mode relative to the positioning accuracy of the model before updating reaching a first positioning accuracy improvement amount, which indicates that the improvement amount of the positioning accuracy of the updated model relative to the positioning accuracy of the model before updating meets the preset condition.

Optionally, the first positioning accuracy may be in units of meters, in units of centimeters, or in units of millimeters, which is not limited in the present disclosure.

Optionally, the first positioning accuracy improvement amount may be in units of meters, or in units of centimeters, or in units of millimeters, which is not limited in the present disclosure.

In some embodiments, the first device is the terminal device, and the first positioning accuracy may be predefined, preconfigured, determined by the terminal device itself, or configured by the network device.

In some other embodiments, the first device is the network device, and the first positioning accuracy may be predefined, or determined by the network device.

In some embodiments, the first device is the terminal device, and the first positioning accuracy improvement amount may be predefined, preconfigured, determined by the terminal device itself, or configured by the network device.

In some other embodiments, the first device is the network device, and the first positioning accuracy improvement amount may be predefined or determined by the network device.

In some embodiments, the updating duration of the model meeting the preset condition includes:
the updating duration corresponding to the model updated based on the target updating mode being less than a first duration threshold.

In some embodiments, the first device is the terminal device, and the first duration threshold may be predefined, preconfigured, or determined by the terminal device itself, or configured by the network device.

In some other embodiments, the first device is the network device, and the first duration threshold may be predefined or determined by the network device.

In some embodiments, the number of samples required for training the updated model meeting the preset condition includes:
the number of samples required for training the model updated based on the target updating mode being smaller than a first sample number threshold.

In some embodiments, the first device is the terminal device, and the first sample number threshold may be predefined, preconfigured, or determined by the terminal device itself, or configured by the network device.

In some other embodiments, the first device is the network device, and the first sample number threshold may be predefined or determined by the network device.

Model updating modes according to the embodiments of the present disclosure will be described below in conjunction with specific examples.

Example 1: the first information includes the model complexity, the computational complexity of the model, and the positioning accuracy of the model.

For example, in a case where the positioning accuracy of the model updated based on the target updating mode reaches the first positioning accuracy or the improvement amount of the positioning accuracy of the model updated based on the target updating mode relative to the positioning accuracy of the model before updating reaches the first positioning accuracy improvement amount, if the complexity of the model updated based on the target updating mode is lower than a first model complexity threshold and/or the computational complexity is lower than a first computational complexity threshold, the first device may perform the model updating using the target updating mode.

Example 2: the first information includes the updating duration of the model and the positioning accuracy of the model.

For example, in a case where the positioning accuracy of the model updated based on the target updating mode reaches the first positioning accuracy or the improvement amount of the positioning accuracy of the model updated based on the target updating mode relative to the positioning accuracy of the model before updating reaches a first positioning accuracy improvement amount, if the updating duration of the model updated based on the target updating mode is less than a first duration threshold, the first device may perform the model updating using the target updating mode.

Example 3: the first information includes the updating duration of the model, the positioning accuracy of the model, and the number of samples required for training the updated model.

For example, in a case where the positioning accuracy of the model updated based on the target updating mode reaches the first positioning accuracy or the improvement amount of the positioning accuracy of the model updated based on the target updating mode relative to the positioning accuracy of the model before updating reaches the first positioning accuracy improvement amount, if the updating duration of the model updated based on the target updating mode is less than a first duration threshold, and/or the number of samples required for training the updated model is smaller than a first sample number threshold, the target updating mode is applied to perform the model updating.

Example 4: the first information includes the computational complexity, the positioning accuracy, and the number of samples required for training the updated model.

For example, in a case where the positioning accuracy of the model updated based on the target updating mode reaches the first positioning accuracy or the improvement amount of the positioning accuracy of the model updated based on the target updating mode relative to the positioning accuracy of the model before updating reaches the first positioning accuracy improvement amount, if the computational complexity of the model updated based on the target updating mode is lower than a first computational complexity threshold, and/or the number of samples required for training the updated model is smaller than a first sample number threshold, the target updating mode is applied to perform the model updating.

Example 5: the first information includes the model complexity, the positioning accuracy, and the number of samples required for training the updated model.

For example, in a case where the positioning accuracy of the model updated based on the target updating mode reaches the first positioning accuracy or the improvement amount of the positioning accuracy of the model updated based on the target updating mode relative to the positioning accuracy of the model before updating reaches the first positioning accuracy improvement amount, if the complexity of the model updated based on the target updating mode is lower than a first model complexity threshold, and/or the number of samples required for training the updated model is smaller than a first sample number threshold, the target updating mode is applied to perform the model updating.

In some embodiments, the method 300 further includes:
determining, based on predicted intermediate information of location information of the terminal device and actual intermediate information of location information of the terminal device, a positioning accuracy of the model updated based on the target updating mode, where the predicted intermediate information is output information of the updated model, and the predicted intermediate information is used to determine predicted location information of the terminal device.

For example, the output information of the model is intermediate information of the location information of the terminal device, such as distance information between the terminal device and the network device. In this case, the positioning accuracy may be error between distance information between the terminal device and the network device predicted by the model and actual distance information between the terminal device and the network device.

In some embodiments, in a case where the output information of the model updated based on the target updating mode is the intermediate information of the location information of the terminal device, the method 300 further includes:
transmitting, by the first device, the intermediate information of the location information of the terminal device to the second device; and
receiving, by the first device, second information transmitted from the second device, where the second information includes the location information of the terminal device predicted by the second device based on the intermediate information.

In some embodiments, the first device is the terminal device, and the method 300 further includes:
transmitting, by the terminal device, a first request message to a network device for requesting updating of the first model; and
receiving, by the terminal device, second indication information transmitted from the network device for indicating updating of the first model.

That is, in a case where the terminal device determines that the model updating is required, the terminal device may request the model updating from the network device, and further perform the model updating based on an indication of the network device. Optionally, the network device may be a base station, a TRP or an LMF.

In some embodiments, the first device is the terminal device, and the method 300 further includes:
transmitting, by the terminal device, third indication information to a network device for indicating that the first model has been updated.

That is, after the terminal device has updated the model, the terminal device may notify the network device, which is beneficial for the network device to understand status of the model on the terminal device side to send positioning-related configuration information corresponding to the updated model.

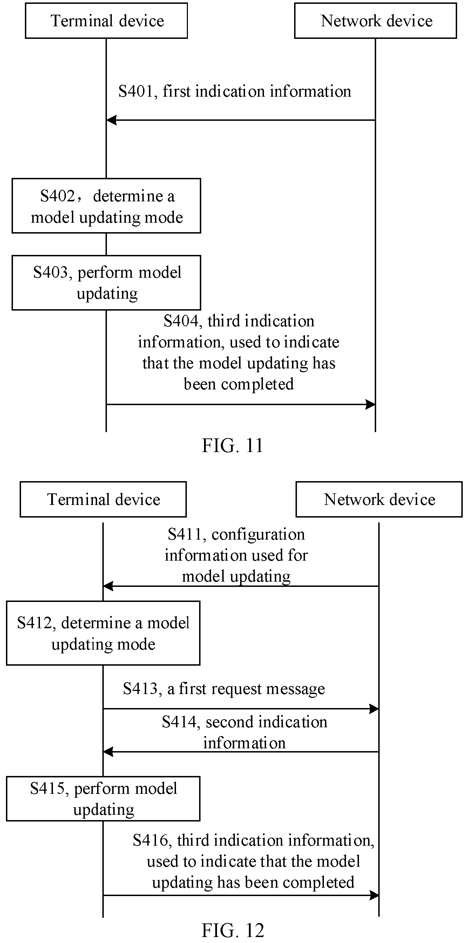

The model updating method according to the embodiments of the present disclosure will be described in detail from the perspective of interaction of devices below in conjunction with FIGS. 11 to 17.

In the model updating method illustrated in FIGS. 11 to 15, the model is deployed on the terminal device side (i.e., the first device is the terminal device), and the model updating is performed by the terminal device.

As illustrated in FIG. 11, the following steps may be included.

In S401, the terminal device receives first indication information transmitted from a network device, where the first indication information is used to indicate a target updating mode, such as a first updating mode, a second updating mode or a third updating mode.

In S402, the terminal device determines the target updating mode for performing the model updating based on the first indication information.

For example, the updating mode indicated by the first indication information is used as the target updating mode.

As another example, in a case where at least one of model complexity updated based on the updating mode indicated by the first indication information, computational complexity updated based on the updating mode indicated by the first indication information, a positioning accuracy updated based on the updating mode indicated by the first indication information, updating duration updated based on the updating mode indicated by the first indication information, and the number of samples required for training an updated model updated based on the updating mode indicated by the first indication information meets a preset condition, the updating mode indicated by the first indication information is determined as the target updating mode, and for the specific implementation, reference may be made to the related description in the method 200.

In S403, the terminal device performs the model updating based on the target updating mode.

In S404, the terminal device transmits third indication information to the network device for indicating that the model updating has been completed.

As illustrated in FIG. 12, the following steps may be included.

In S411, the terminal device receives configuration information for the model updating transmitted from the network device.

Optionally, the configuration information is used to configure at least one of a model complexity threshold, a computational complexity threshold, a positioning accuracy threshold, a positioning accuracy improvement amount threshold, an updating duration threshold, and a sample number threshold for selection of the updating mode.

In S412, the terminal device determines, based on first information, a target updating mode in a plurality of updating modes, or determines whether to perform the model updating using the target updating mode. For the specific implementation procedure, reference may be made to the related description in the method 200 and the method 300, and details are not repeated here for the sake of brevity.

In S413, the terminal device transmits a first request message to a network device for requesting the model updating.

In S414, the network device transmits second indication information to the terminal device for indicating that the terminal device is to perform the model updating.

In S415, the terminal device performs the model updating based on the target updating mode.

In S416, the terminal device transmits third indication information to the network device for indicating that the model updating has been completed.

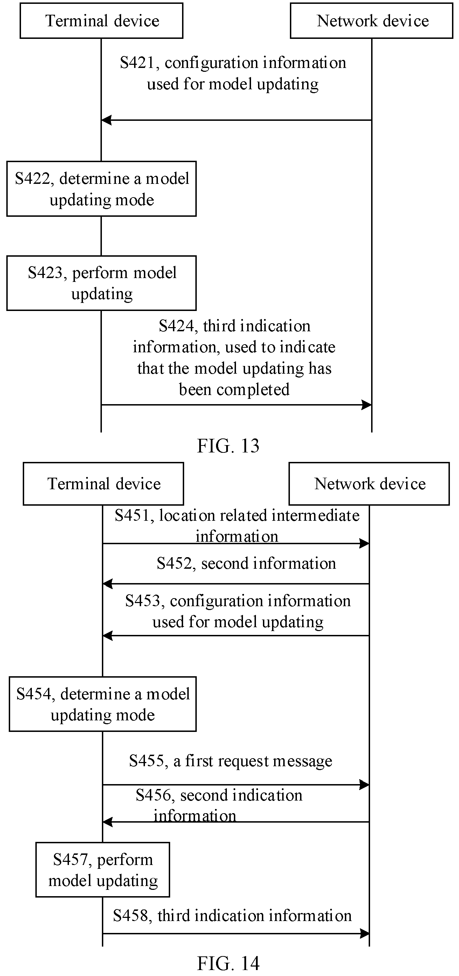

The difference between a model updating mode in FIG. 13 and a model updating mode in FIG. 12 is that, FIG. 13 omits the steps of the terminal device requesting the model updating and the network device indicating that the terminal device is to perform the model updating. In a case where the terminal device determines to use the target updating mode to perform the model updating, the model updating is performed based on the target updating mode.

The model updating method provided in FIG. 12 and FIG. 13 may be applied to a model-based direct positioning scenario, that is, output information of the model is the location information of the terminal device. In the examples of FIG. 12 and FIG. 13, the terminal device may determine the positioning accuracy of the model based on location information of the terminal device estimated by the model and actual location information of the terminal device.

As illustrated in FIG. 14, the following steps may be included.

In S451, the terminal device transmits location related intermediate information to the network device.

The intermediate information is output information of the updated model, and the intermediate information may be used to determine the location information of the terminal device.

In S452, the network device transmits second information to the terminal device, where the second information includes the location information of the terminal device determined based on the intermediate information.

In S453, the terminal device receives configuration information for the model updating transmitted from the network device.

Optionally, the configuration information is used to configure at least one of a model complexity threshold, a computational complexity threshold, a positioning accuracy threshold, a positioning accuracy improvement amount threshold, an updating duration threshold, and a sample number threshold for selection of the updating mode.

It should be understood that the present disclosure does not limit the execution steps of S451, S452 and S453. For example, S453 may be performed and then S451 and S452 are performed, or S452 and S453 may be performed simultaneously.

In S454, the terminal device determines, based on first information, a target updating mode in a plurality of updating modes, or determines whether to perform the model updating using the target updating mode. For the specific implementation procedure, reference may be made to the related description in the method 200 and the method 300, and details are not repeated here for the sake of brevity.

In S455, the terminal device transmits a first request message to a network device, for requesting the model updating.

In S456, the network device transmits second indication information to the terminal device for indicating that the terminal device is to perform the model updating.

In S457, the terminal device performs the model updating based on the target updating mode.

In S458, the terminal device transmits third indication information to the network device for indicating that the model updating has been completed.

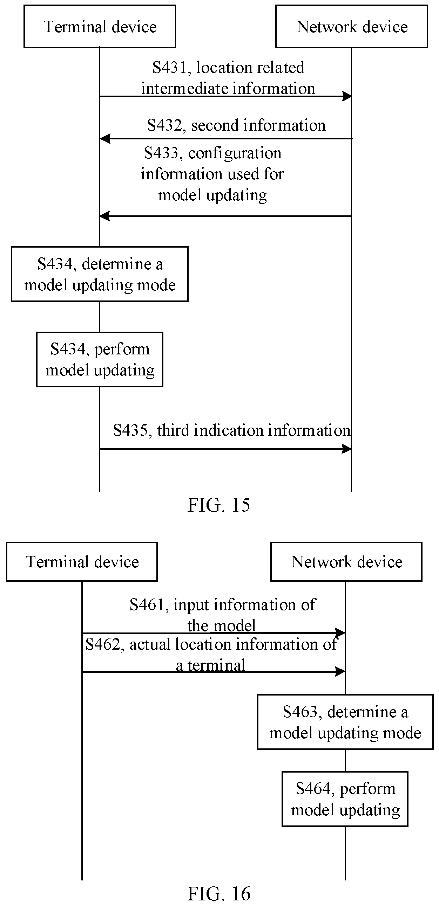

The difference between a model updating mode in FIG. 15 and a model updating mode in FIG. 14 is that, FIG. 15 omits the steps of the terminal device requesting the model updating and the network device indicating that the terminal device is to perform the model updating. In a case where the terminal device determines to use the target updating mode to perform the model updating, the model updating is performed based on the target updating mode.

The model updating method provided in FIG. 14 and FIG. 15 may be applied to a model-based assisted positioning scenario, that is, output information of the model is location related intermediate information of the terminal device.

It should be noted that in the examples of FIGS. 14 and 15, in a case where the terminal device may determine the positioning accuracy of the model based on location related intermediate information of the terminal device estimated by the model and actual location related intermediate information, the steps of the terminal device transmitting the intermediate information to the network device and receiving the second information transmitted from the network device may be omitted.

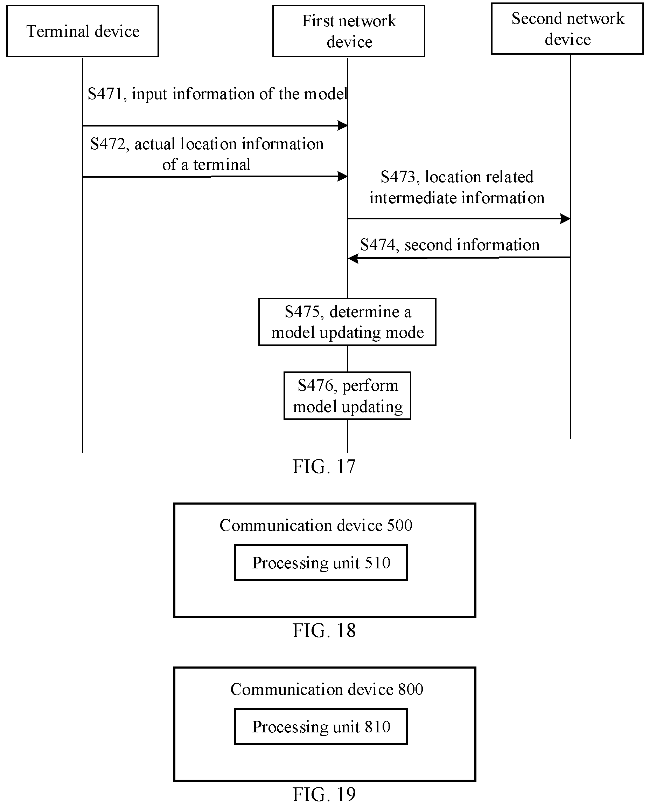

In the model updating method illustrated in FIG. 16 and FIG. 17, the model is deployed on the network device side (i.e., the first device is the network device), and the model updating is performed by the network device.

It should be understood that in the examples of FIGS. 16 and 17, input information of the model may be obtained from the terminal device, or may be measured by the network device. The actual location information of the terminal device (i.e., tag location data) may be obtained from the terminal device, or may be obtained from an LMF. The present disclosure is only described by taking an example of obtaining the input information of the model from the terminal device, which is not limited in the present disclosure.

As illustrated in FIG. 16, the following steps may be included.

In S461, the network device obtains input information of the model from the terminal device, such as a measurement result of a PRS.

In S462, the network device obtains actual location information of the terminal device from the terminal device.

It should be understood that the present disclosure does not limit an execution order of S461 and S462. For example, the S461 and the S462 may be performed simultaneously, or the S462 may be performed and then the S461 is performed.

In S463, the network device determines, based on first information, a target updating mode in a plurality of updating modes, or determines whether to perform the model updating using the target updating mode. For the specific implementation procedure, reference may be made to the related description in the method 200 and the method 300, and details are not repeated here for the sake of brevity.

In S464, the network device performs the model updating based on the target updating mode.

The model updating method illustrated in FIG. 16 may be applied to a model-based direct positioning scenario, that is, the output information of the model is location information of the terminal device.

As illustrated in FIG. 17, the following steps may be included.

In S471, a first network device obtains input information of the model from the terminal device, such as a measurement result of a PRS.

In S472, the first network device obtains actual location information of the terminal device from the terminal device.

It should be understood that the present disclosure does not limit an execution order of S471 and S472. For example, the S471 and the S472 may be performed simultaneously, or the S472 may be performed and then the S471 is performed.

In S473, the first network device transmits location related intermediate information to a second network device.

The intermediate information is output information of the model, and the intermediate information may be used to determine location information of the terminal device.

In S474, the second network device transmits second information to the first network device, where the second information includes the location information of the terminal device determined based on the intermediate information.

In S475, the network device determines, based on first information, a target updating mode in a plurality of updating modes, or determines whether to perform the model updating using the target updating mode. For the specific implementation procedure, reference may be made to the related description in the method 200 and the method 300, and details are not repeated here for the sake of brevity.

In S476, the network device performs the model updating based on the target updating mode.

The model updating method illustrated in FIG. 17 may be applied to a model-based assisted positioning scenario, that is, the output information of the model is location related intermediate information of the terminal device.

Optionally, the first network device may be a base station or a TRP, and the second network device may be an LMF.

It should be noted that in the example of FIG. 17, in a case where the first network device may determine the positioning accuracy of the model based on location related intermediate information of the terminal device estimated by the model and actual location related intermediate information, the steps of the first network device transmitting the intermediate information to the second network device and receiving the second information transmitted from the second network device may be omitted.

In summary, in the embodiments of the present disclosure, the terminal device or the network device may select the target updating mode used for the model updating based on the performance parameter of the model, which is conducive to ensuring performance of the updated model. For example, in a case where the positioning accuracy of the model is ensured, an updating mode with low model complexity or low computational complexity or short updating duration is selected, which is conducive to reducing the difficulty of the model training.

The method embodiments of the present disclosure are described in detail above in conjunction with

FIGS. 9 to 17, and the apparatus embodiments of the present disclosure will be described in detail below in conjunction with FIGS. 18 to 21. It should be understood that the description of the apparatus embodiments and the description of the method embodiments correspond to each other, and similar descriptions may refer to that of the method embodiments.

FIG. 18 illustrates a schematic block diagram of a communication device 500 according to the embodiments of the present disclosure. As illustrated in FIG. 18, the communication device 500 includes:
a processing unit 510, configured to determine, based on first information and/or first indication information of a second device, a target updating mode of a first model in a plurality of updating modes;
where the first model is used to determine location related information of a terminal device, the first information includes performance parameter(s) of a model, the first indication information is used to indicate the target updating mode, and the plurality of updating modes include at least two of:
   a first updating mode indicating that a part of model parameters of the first model and/or a model structure of the first model is updated;
   a second updating mode indicating that the first model is updated to a second model; and
   a third updating mode indicating that the first model is updated to a third model, where the third model is obtained through training based on sample sets in a plurality of scenarios.

In some embodiments, the first information includes at least one of the following performance parameters: model complexity, computational complexity of the model, a positioning accuracy of the model, updating duration of the model, and the number of samples required for training an updated model.

In some embodiments, the processing unit 510 is further configured to:
determine an updating mode of which at least one of model complexity corresponding to the updated model, computational complexity of the model corresponding to the updated model, a positioning accuracy of the model corresponding to the updated model, updating duration of the model corresponding to the updated model, and the number of samples required for training the updated model corresponding to the updated model meets a preset condition as the target updating mode of the first model.

In some embodiments, the processing unit 510 is further configured to:
in a case where positioning accuracies of the model updated based on the plurality of updating modes meet the preset condition, determine an updating mode of which the at least one of the model complexity corresponding to the updated model, the computational complexity of the model corresponding to the updated model, the updating duration of the model corresponding to the updated model, and the number of samples required for training the updated model corresponding to the updated model meets the preset condition as the target updating mode of the first model.

In some embodiments, the communication device is the terminal device, and the processing unit 510 is further configured to:
in a case where the first indication information indicates the first updating mode, and at least one of model complexity corresponding to a model updated based on the first updating mode, computational complexity corresponding to the model updated based on the first updating mode, a positioning accuracy corresponding to the model updated based on the first updating mode, updating duration corresponding to the model updated based on the first updating mode, and the number of samples required for training the updated model corresponding to the model updated based on the first updating mode meets the preset condition, determine to update the first model based on the first updating mode; or
in a case where the first indication information indicates the second updating mode, and at least one of model complexity corresponding to the model updated based on the second updating mode, computational complexity corresponding to the model updated based on the second updating mode, a positioning accuracy corresponding to the model updated based on the second updating mode, updating duration corresponding to the model updated based on the second updating mode, and the number of samples required for training an updated model corresponding to the model updated based on the second updating mode meets the preset condition, determine to update the first model based on the second updating mode; or
in a case where the first indication information indicates the third updating mode, and at least one of model complexity corresponding to the model updated based on the third updating mode, computational complexity corresponding to the model updated based on the third updating mode, a positioning accuracy corresponding to the model updated based on the third updating mode, updating duration corresponding to the model updated based on the third updating mode, and the number of samples required for training the updated model corresponding to the model updated based on the third updating mode meets the preset condition, determine to update the first model based on the third updating mode.

In some embodiments, the model complexity meeting the preset condition includes:
the model complexity corresponding to the model updated based on the target updating mode being the lowest; and/or
the model complexity corresponding to the model updated based on the target updating mode being less than a first model complexity threshold.

In some embodiments, the computational complexity of the model meeting the preset condition includes:
computational complexity corresponding to the model updated based on the target updating mode being the lowest; and/or
the computational complexity corresponding to the model updated based on the target updating mode being less than a first computational complexity threshold.

In some embodiments, the positioning accuracy of the model meeting the preset condition includes:
a positioning accuracy of the model updated based on the target updating mode reaching a first positioning accuracy; and/or
an improvement amount of the positioning accuracy of the model updated based on the target updating mode relative to a positioning accuracy of the model before updating reaching a first positioning accuracy improvement amount.

In some embodiments, the updating duration of the model meeting the preset condition includes:
updating duration corresponding to the model updated based on the target updating mode being the shortest; and/or
the updating duration corresponding to the model updated based on the target updating mode being less than a first duration threshold.

In some embodiments, the number of samples required for training the updated model meeting the preset condition includes:
the number of samples required for training the model updated based on the target updating mode being smallest; and/or
the number of samples required for training the model updated based on the target updating mode being smaller than a first sample number threshold.

In some embodiments, the processing unit 510 is further configured to:
determine, based on predicted location information of the terminal device and actual location information of the terminal device, a respective positioning accuracy of the model updated based on each updating mode of the plurality of updating modes;
wherein the predicted location information of the terminal device is output information of the updated model, or
the predicted location information of the terminal device is determined based on the output information of the updated model, and the output information of the updated model is intermediate information of the location information of the terminal device.

In some embodiments, the processing unit 510 is further configured to:
determine, based on predicted intermediate information of location information of the terminal device and actual intermediate information of the location information of the terminal device, a positioning accuracy of the updated model, where the predicted intermediate information is output information of the updated model, and the predicted intermediate information is used to determine predicted location information of the terminal device.

In some embodiments, the output information of the model updated based on the plurality of updating modes is the intermediate information of the location information of the terminal device, and the communication device 500 further includes:
a communication unit, configured to transmit the intermediate information of the location information of the terminal device to the second device; and
receive second information transmitted from the second device, where the second information includes the location information of the terminal device predicted by the second device based on the intermediate information.

In some embodiments, the communication device 500 is the terminal device, and the second device is a network device; or
the communication device 500 is a first network device, and the second device is a second network device.

In some embodiments, the first network device is a transmission reception point (TRP), and the second network device is a positioning management function (LMF) entity.

In some embodiments, the communication device is the terminal device, and the communication device 500 further includes:
a communication unit, configured to transmit a first request message to a network device, where the first request message is used to request updating of the first model; and
receive second indication information transmitted from the network device, where the second indication information is used to indicate updating of the first model.

In some embodiments, the communication device 500 is the terminal device, and the communication device 500 further includes:
a communication unit, configured to transmit third indication information to a network device, where the third indication information is used to indicate that the first model has been updated.

In some embodiments, the communication device 500 is a network device, and the processing unit 510 is further configured to:
obtain, from the terminal device, input information of the model and actual location information of the terminal device.

Optionally, in some embodiments, the communication unit may be a communication interface or a transceiver, or an input/output interface of a communication chip or a system on chip. The processing unit may be one or more processors.

It should be understood that, the communication device 500 according to the embodiments of the present disclosure may correspond to the first device in the method embodiments of the present disclosure, and the above and other operations and/or functions of various units of the communication device 500 are respectively for implementing the corresponding procedures of the first device in the method embodiments illustrated in FIGS. 9 to 17, and details are not repeated here for the sake of brevity.

FIG. 19 is a schematic block diagram of a communication device according to the embodiments of the present disclosure. The communication device 800 in FIG. 19 includes:
a processing unit 810, configured to determine, based on first information, whether to update a first model based on a target updating mode, where the first model is used to determine location related information of a terminal device, the first information includes performance parameter(s) of a model, and the target updating mode is one of:
a first updating mode indicating that a part of model parameters of the first model and/or a model structure of the first model is updated;
a second updating mode indicating that the first model is updated to a second model; and
a third updating mode indicating that the first model is updated to a third model, where the third model is obtained through training based on sample sets in a plurality of scenarios.

In some embodiments, the first information includes at least one of:
model complexity, computational complexity of the model, a positioning accuracy of the model, updating duration of the model, and the number of samples required for training an updated model.

In some embodiments, the processing unit 810 is further configured to:
in a case where at least one of model complexity corresponding to a model updated based on the target updating mode, computational complexity corresponding to the model updated based on the target updating mode, a positioning accuracy corresponding to the model updated based on the target updating mode, updating duration corresponding to the model updated based on the target updating mode, and the number of samples required for training an updated model corresponding to the model updated based on the target updating mode meets a preset condition, determine to update the first model based on the target updating mode.

In some embodiments, the processing unit 810 is further configured to:
in a case where the positioning accuracy of the model updated based on the target updating mode meets the preset condition, if at least one of the model complexity corresponding to the model updated based on the target updating mode, the computational complexity corresponding to the model updated based on the target updating mode, the updating duration corresponding to the model updated based on the target updating mode, and the number of samples required for training the updated model corresponding to the model updated based on the target updating mode meets the preset condition, determine to update the first model based on the target updating mode.

In some embodiments, the model complexity meeting the preset condition includes:
the model complexity corresponding to the model updated based on the target updating mode being at least less than a first model complexity threshold.

In some embodiments, the computational complexity of the model meeting the preset condition includes:
the computational complexity corresponding to the model updated based on the target updating mode being less than a first computational complexity threshold.

In some embodiments, the positioning accuracy of the model meeting the preset condition includes:
the positioning accuracy of the model updated based on the target updating mode reaching a first positioning accuracy; and/or
an improvement amount of the positioning accuracy of the model updated based on the target updating mode relative to a positioning accuracy of the model before updating reaching a first positioning accuracy improvement amount.

In some embodiments, the updating duration of the model meeting the preset condition includes:
the updating duration corresponding to the model updated based on the target updating mode being less than a first duration threshold.

In some embodiments, the number of samples required for training the updated model meeting the preset condition includes:
the number of samples required for training the model updated based on the target updating mode being smaller than a first sample number threshold.

In some embodiments, the processing unit 810 is further configured to:
determine, based on predicted location information of the terminal device and actual location information of the terminal device, a positioning accuracy of a model updated based on the target updating mode, where the predicted location information of the terminal device is output information of an updated model, or
the predicted location information of the terminal device is determined based on the output information of the updated model, and the output information of the updated model is intermediate information of location information of the terminal device.

In some embodiments, the processing unit 810 is further configured to:
determine, based on predicted intermediate information of location information of the terminal device and actual intermediate information of the location information of the terminal device, a positioning accuracy of an updated model, where the predicted intermediate information is output information of the updated model, and the predicted intermediate information is used to determine predicted location information of the terminal device.

In some embodiments, the output information of the model updated based on the target updating mode is the intermediate information of the location information of the terminal device, and the communication device 800 further includes:
a communication unit, configured to transmit the intermediate information of the location information of the terminal device to a second device; and
receive second information transmitted from the second device, where the second information includes the location information of the terminal device predicted by the second device based on the intermediate information.

In some embodiments, the communication device 800 is the terminal device, and the second device is a network device; or
the communication device 800 is a first network device, and the second device is a second network device.

In some embodiments, the communication device 800 is a terminal device, and the communication device 800 further includes:
a communication unit, configured to transmit a first request message to a network device, where the first request message is used to request updating of the first model; and receive second indication information transmitted from the network device, where the second indication information is used to indicate updating of the first model.

In some embodiments, the communication device 800 further includes: a communication unit, configured to transmit third indication information to a network device, where the third indication information is used to indicate that the first model has been updated.

In some embodiments, the communication device 800 is a network device, and the processing unit 810 is further configured to:
obtaining, from the terminal device, input information of the model and actual location information of the terminal device.

Optionally, in some embodiments, the communication unit may be a communication interface or a transceiver, or an input/output interface of a communication chip or a system on chip. The processing unit may be one or more processors.

It should be understood that the network device 500 according to the embodiments of the present disclosure may correspond to the network device in the method embodiments of the present disclosure, and the above and other operations and/or functions of various units in the network device 500 are respectively for implementing corresponding procedures of the first device in the method embodiments illustrated in FIGS. 9 to 17, and details are not repeated here for the sake of brevity.

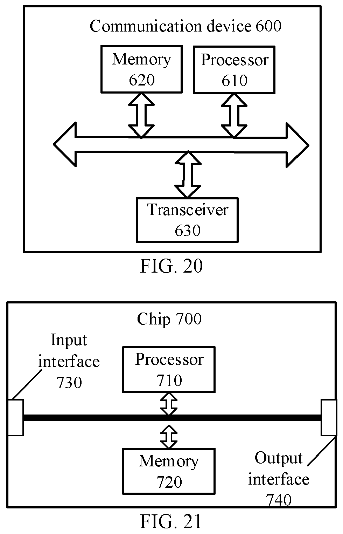

FIG. 20 is a schematic structural diagram of a communication device 600 provided in the embodiments of the present disclosure. The communication device 600 illustrated in FIG. 20 includes a processor 610, and the processor 610 may call a computer program from a memory and run the computer program to implement the methods in the embodiments of the present disclosure.

Optionally, as illustrated in FIG. 20, the communication device 600 may further include a memory 620. The processor 610 may call a computer program from the memory 620 and run the computer program to implement the methods in the embodiments of the present disclosure.

The memory 620 may be a separate device independent from the processor 610, or may be integrated into the processor 610.

Optionally, as illustrated in FIG. 20, the communication device 600 may further include a transceiver 630. The processor 610 may control the transceiver 630 to communicate with other devices, and specifically, may transmit information or data to other devices, or receive information or data transmitted from other devices.

The transceiver 630 may include a transmitter and a receiver. The transceiver 630 may further include an antenna (antennas), and the number of the antenna(s) may be one or more.

Optionally, the communication device 600 may specifically be a first device or a second device in the embodiments of the present disclosure, and the communication device 600 may implement the corresponding procedures implemented by the first device or the second device in various methods in the embodiments of the present disclosure, and details are not repeated here for the sake of brevity.

Optionally, the communication device 600 may specifically be a network device in the embodiments of the present disclosure, and the communication device 600 may implement the corresponding procedures implemented by the network device in various methods in the embodiments of the present disclosure, and details are not repeated here for the sake of brevity.

Optionally, the communication device 600 may specifically be a mobile terminal/a terminal device in the embodiments of the present disclosure, and the communication device 600 may implement the corresponding procedures implemented by the mobile terminal/terminal device in various methods in the embodiments of the present disclosure, and details are not repeated here for the sake of brevity.

FIG. 21 is a schematic structural diagram of a chip in the embodiments of the present disclosure. The chip 700 illustrated in FIG. 21 includes a processor 710, and the processor 710 may call a computer program from a memory and run the computer program to implement the methods in the embodiments of the present disclosure.

Optionally, as illustrated in FIG. 21, the chip 700 may further include a memory 720. The processor 710 may call a computer program from the memory 720 and run the computer program to implement the methods in the embodiments of the present disclosure.

The memory 720 may be a separate device independent from the processor 710, or may be integrated into the processor 710.

Optionally, the chip 700 may further include an input interface 730. The processor 710 may control the input interface 730 to communicate with other devices or chips, and specifically, may obtain information or data transmitted from other devices or chips.

Optionally, the chip 700 may further include an output interface 740. The processor 710 may control the output interface 740 to communicate with other devices or chips, and specifically, may output information or data to other devices or chips.

Optionally, the chip may be applied to the first device or the second device in the embodiments of the present disclosure, and the chip may implement the corresponding procedures implemented by the first device or the second device in various methods in the embodiments of the present disclosure, and details are not repeated here for the sake of brevity.

Optionally, the chip may be applied to the network device in the embodiments of the present disclosure, and the chip may implement the corresponding procedures implemented by the network device in various methods in the embodiments of the present disclosure, and details are not repeated here for the sake of brevity.

Optionally, the chip may be applied to the mobile terminal/terminal device in the embodiments of the present disclosure, and the chip may implement the corresponding procedures implemented by the mobile terminal/terminal device in various methods in the embodiments of the present disclosure, and details are not repeated here for the sake of brevity.

It should be understood that the chip mentioned in the embodiments of the present disclosure may also be called a system-level chip, a system chip, a chip system or a system-on-chip chip, or the like.

It should be understood that the processor in the embodiments of the present disclosure may be an integrated circuit chip with a processing capability of signals. In the implementation process, various steps of the above method embodiments may be completed by an integrated logic circuit of hardware in the processor or instructions in a software form. The above processor may be a general purpose processor, a digital signal processor (DSP), an application specific integrated circuit (ASIC), a field programmable gate array (FPGA) or other programmable logic devices, a discrete gate, a transistor logic device, or a discrete hardware component. Various methods, steps and logical block diagrams disclosed in the embodiments of the present disclosure may be implemented or performed. A general purpose processor may be a microprocessor, or the processor may be any conventional processor, etc. The steps of the methods disclosed in the embodiments of the present disclosure may be directly embodied as being performed and completed by a hardware decoding processor, or by using a combination of hardware and software modules in the decoding processor. The software module may be located in the random memory, the flash memory, the read-only memory, the programmable read-only memory or electrically erasable programmable memory, the register, or other mature storage media in the art. The storage medium is located in the memory, and the processor reads the information in the memory and completes the steps of the above method in combination with its hardware.

It will be understood that, the memory in the embodiments of the present disclosure may be a volatile (transitory) memory or a non-volatile (non-transitory) memory, or may include both volatile and non-volatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. As an example but not a limitation, a variety of forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the systems and methods described herein is intended to include, but is not limited to, these and any other suitable types of memories.

It should be understood that the above memory is exemplary but not limited illustration. For example, the memory in the embodiments of the present disclosure may be a static RAM (SRAM), a dynamic RAM (DRAM), a synchronous DRAM (SDRAM)), a double data rate SDRAM (DDR SDRAM), an enhanced SDRAM (ESDRAM), a synchronous link DRAM (SLDRAM), or a direct rambus RAM (DR RAM), etc. That is, the memory in the embodiments of the present disclosure is intended to include, but is not limited to, these and any other suitable types of memories.

The embodiments of the present disclosure further provide a computer-readable storage medium for storing a computer program.

Optionally, the computer-readable storage medium may be applied to the first device or the second device in the embodiments of the present disclosure, and the computer program enables the computer to perform the corresponding procedures implemented by the first device or the second device in the various methods in the embodiments of the present disclosure, and details are not repeated here for the sake of brevity.

Optionally, the computer-readable storage medium may be applied to the network device in the embodiments of the present disclosure, and the computer program enables the computer to perform the corresponding procedures implemented by the network device in the various methods in the embodiments of the present disclosure, and details are not repeated here for the sake of brevity.

Optionally, the computer-readable storage medium may be applied to the mobile terminal/terminal device in the embodiments of the present disclosure, and the computer program enables the computer to perform the corresponding procedures implemented by the mobile terminal/terminal device in the various methods in the embodiments of the present disclosure, and details are not repeated here for the sake of brevity.

The embodiments of the present disclosure further provide a computer program product including computer program instructions.

Optionally, the computer program product may be applied to the first device or the second device in the embodiments of the present disclosure, and the computer program instructions enable a computer to perform the corresponding procedures implemented by the first device or the second device in the various methods in the embodiments of the present disclosure, and details are not repeated here for the sake of brevity.

Optionally, the computer program product may be applied to the network device in the embodiments of the present disclosure, and the computer program instructions enable a computer to perform the corresponding procedures implemented by the network device in the various methods in the embodiments of the present disclosure, and details are not repeated here for the sake of brevity.

Optionally, the computer program product may be applied to the mobile terminal/terminal device in the embodiments of the present disclosure, and the computer program instructions enable a computer to perform the corresponding procedures implemented by the mobile terminal/terminal device in the various methods in the embodiments of the present disclosure, and details are not repeated here for the sake of brevity.

The embodiments of the present disclosure further provide a computer program.

Optionally, the computer program may be applied to the first device or the second device in the embodiments of the present disclosure. The computer program, when run on a computer, enables the computer to perform the corresponding procedures implemented by the first device or the second device in the various methods in the embodiments of the present disclosure, and details are not repeated here for the sake of brevity.

Optionally, the computer program may be applied to the network device in the embodiments of the present disclosure. The computer program, when run on a computer, enables the computer to perform the corresponding procedures implemented by the network device in the various methods in the embodiments of the present disclosure, and details are not repeated here for the sake of brevity.

Optionally, the computer program may be applied to the mobile terminal/terminal device in the embodiments of the present disclosure. The computer program, when run on a computer, enables the computer to perform the corresponding procedures implemented by the mobile terminal/terminal device in the various methods in the embodiments of the present disclosure, and details are not repeated here for the sake of brevity.

Those of ordinary skill in the art will appreciate that units and algorithm steps of all examples described in conjunction with the embodiments disclosed herein may be implemented by electronic hardware, or by a combination of computer software and electronic hardware. Whether these functions are performed in hardware or software depends on the specific application and design constraints of the technical solutions. A skilled person may use different methods to implement the described functions for each specific application, but such implementation should not be considered beyond the scope of the present disclosure.

It may be clearly understood by those skilled in the art that for convenience and brevity of the description, the specific operating procedures of the system, apparatus/device and units described above may refer to the corresponding procedures in the above method embodiments, and details are not repeated here.

In several embodiments provided by the present disclosure, it should be understood that the disclosed system, apparatus/device and methods may be implemented in other ways. For example, the device embodiments described above are only schematic. For example, the division of the units is only division of logical functions, and there may be other division ways in the actual implementation, for example, a plurality of units or components may be combined or integrated into another system, or some features may be ignored or not implemented. In addition, the mutual coupling or direct coupling or communication connection between each other as illustrated or discussed may be indirect coupling or communicative connection of devices or units via some interfaces, which may be electrical, mechanical, or in other forms.

The units described as separation components may or may not be physically separated, and the components illustrated as units may or may not be physical units, that is, they may be located in one place, or may be distributed onto a plurality of network units. Some or all of the units may be selected according to actual requirements to implement the purpose of the schemes of the embodiments.

In addition, various functional units in the various embodiments of the present disclosure may be integrated into one processing unit, or various units may exist physically separately, or two or more units may be integrated into one unit.

If the functions are implemented in the form of a software functional unit and sold or used as an independent product, they may be stored in a computer readable storage medium. Based on such an understanding, the technical solution of the present disclosure essentially, or a part of the technical solutions that contribute to a prior art or a part of the technical solutions, may be embodied in the form of a software product, and the computer software product is stored in a storage medium and includes several instructions for enabling a computer device (which may be a personal computer, a server, a network device, or the like) to perform all or some of the steps of the methods described in various embodiments of the present disclosure. The aforementioned storage medium includes a USB flash drive (U disk), a mobile hard disk, a read-only memory (ROM), a random access memory (RAM), a diskette, an optical disk, and other mediums that may store program codes.

The foregoing descriptions are merely specific implementations of the present disclosure, but the protection scope of the present disclosure is not limited thereto. Any skilled person in the art could readily conceive of changes or replacements within the technical scope of the present application, which shall all be included in the protection scope of the present application. Therefore, the protection scope of the present disclosure should be subject to the protection scope of the claims.

## Claims

1. A model updating method, comprising:
determining, by a first device, a target updating mode of a first model in a plurality of updating modes based on first information and/or first indication information of a second device;
wherein the first model is used to determine location related information of a terminal device, the first information comprises performance parameter(s) of a model, the first indication information is used to indicate the target updating mode, and the plurality of updating modes comprise at least two of:
a first updating mode, indicating that a part of model parameters of the first model and/or a model structure of the first model is updated;
a second updating mode, indicating that the first model is updated to a second model; and
a third updating mode, indicating that the first model is updated to a third model, wherein the third model is obtained thrtough training based on sample sets in a plurality of scenarios.

2. The method according to claim 1, wherein the first information comprises at least one of following performance parameters:
model complexity, computational complexity of the model, a positioning accuracy of the model, updating duration of the model, and a number of samples required for training an updated model.

3. The method according to claim 2, wherein determining, based on the first information, the target updating mode of the first model in the plurality of updating modes, comprises:
determining an updating mode of which at least one of model complexity corresponding to the updated model, computational complexity of the model corresponding to the updated model, a positioning accuracy of the model corresponding to the updated model, updating duration of the model corresponding to the updated model, and a number of samples required for training the updated model corresponding to the updated model meets a preset condition as the target updating mode of the first model.

4. The method according to claim 3, wherein determining the updating mode of which the at least one of the model complexity, the computational complexity of the model, the positioning accuracy of the model, the updating duration of the model, and the number of samples required for training the updated model meets the preset condition as the target updating mode of the first model, comprises:
in a case where positioning accuracies of the model updated based on the plurality of updating modes meet the preset condition, determining the updating mode of which the at least one of the model complexity corresponding to the updated model, the computational complexity of the model corresponding to the updated model, the updating duration of the model corresponding to the updated model, and the number of samples required for training the updated model corresponding to the updated model meets the preset condition as the target updating mode of the first model.

5. The method according to claim 3, wherein the first device is the terminal device, and the second device is a network device, wherein determining, based on the first information, the target updating mode of the first model in the plurality of updating modes, comprises:
in a case where the first indication information indicates the first updating mode, and at least one of model complexity corresponding to a model updated based on the first updating mode, computational complexity corresponding to the model updated based on the first updating mode, a positioning accuracy corresponding to the model updated based on the first updating mode, updating duration corresponding to the model updated based on the first updating mode, and a number of samples required for training an updated model corresponding to the model updated based on the first updating mode meets the preset condition, determining to update the first model based on the first updating mode; or
in a case where the first indication information indicates the second updating mode, and at least one of model complexity corresponding to a model updated based on the second updating mode, computational complexity corresponding to the model updated based on the second updating mode, a positioning accuracy corresponding to the model updated based on the second updating mode, updating duration corresponding to the model updated based on the second updating mode, and a number of samples required for training an updated model corresponding to the model updated based on the second updating mode meets the preset condition, determining to update the first model based on the second updating mode; or
in a case where the first indication information indicates the third updating mode, and at least one of model complexity corresponding to a model updated based on the third updating mode, computational complexity corresponding to the model updated based on the third updating mode, a positioning accuracy corresponding to the model updated based on the third updating mode, updating duration corresponding to the model updated based on the third updating mode, and a number of samples required for training an updated model corresponding to the model updated based on the third updating mode meets the preset condition, determining to update the first model based on the third updating mode.

6. The method according to any one of claims 3 to 5, wherein the model complexity meeting the preset condition comprises:
model complexity corresponding to a model updated based on the target updating mode being the lowest; and/or
the model complexity corresponding to the model updated based on the target updating mode being less than a first model complexity threshold.

7. The method according to any one of claims 3 to 6, wherein the computational complexity of the model meeting the preset condition comprises:
computational complexity corresponding to a model updated based on the target updating mode being the lowest; and/or
the computational complexity corresponding to the model updated based on the target updating mode being less than a first computational complexity threshold.

8. The method according to any one of claims 3 to 7, wherein the positioning accuracy of the model meeting the preset condition comprises:
a positioning accuracy of a model updated based on the target updating mode reaching a first positioning accuracy; and/or
an improvement amount of the positioning accuracy of the model updated based on the target updating mode relative to a positioning accuracy of the model before updating reaching a first positioning accuracy improvement amount.

9. The method according to any one of claims 3 to 8, wherein the updating duration of the model meeting the preset condition comprises:
updating duration corresponding to a model updated based on the target updating mode being the shortest; and/or
the updating duration corresponding to the model updated based on the target updating mode being less than a first duration threshold.

10. The method according to any one of claims 3 to 9, wherein the number of samples required for training the updated model meeting the preset condition comprises:
a number of samples required for training a model updated based on the target updating mode being smallest; and/or
the number of samples required for training the model updated based on the target updating mode being smaller than a first sample number threshold.

11. The method according to any one of claims 2 to 10, further comprising:
determining, based on predicted location information of the terminal device and actual location information of the terminal device, a respective positioning accuracy of a model updated based on each updating mode of the plurality of updating modes;
wherein the predicted location information of the terminal device is output information of the updated model, or
the predicted location information of the terminal device is determined based on the output information of the updated model, and the output information of the updated model is intermediate information of location information of the terminal device.

12. The method according to any one of claims 2 to 10, further comprising:
determining, based on predicted intermediate information of location information of the terminal device and actual intermediate information of the location information of the terminal device, a positioning accuracy of the updated model, wherein the predicted intermediate information is output information of the updated model, and the predicted intermediate information is used to determine predicted location information of the terminal device.

13. The method according to claim 11 or 12, wherein output information of a model updated based on the plurality of updating modes is intermediate information of location information of the terminal device, and the method further comprises:
transmitting, by the first device, the intermediate information of the location information of the terminal device to the second device; and
receiving, by the first device, second information transmitted from the second device, wherein the second information comprises the location information of the terminal device predicted by the second device based on the intermediate information.

14. The method according to any one of claims 1 to 13, wherein
the first device is the terminal device, and the second device is a network device; or
the first device is a first network device, and the second device is a second network device.

15. The method according to claim 14, wherein the first network device is a transmission reception point (TRP), and the second network device is a location management function (LMF) entity.

16. The method according to any one of claims 1 to 15, wherein the first device is the terminal device, and the method further comprises:
transmitting, by the terminal device, a first request message to a network device, wherein the first request message is used to request updating of the first model; and
receiving, by the terminal device, second indication information transmitted from the network device, wherein the second indication information is used to indicate updating of the first model.

17. The method according to any one of claims 1 to 16, wherein the first device is the terminal device, and the method further comprises:
transmitting, by the terminal device, third indication information to a network device, wherein the third indication information is used to indicate that the first model has been updated.

18. The method according to any one of claims 1 to 17, wherein the first device is a network device, and the method further comprises:
obtaining, from the terminal device, input information of the model and actual location information of the terminal device.

19. A model updating method, comprising:
determining, by a first device, based on first information, whether to update a first model based on a target updating mode, wherein the first model is used to determine location related information of a terminal device, the first information comprises performance parameter(s) of a model, and the target updating mode is one of:
a first updating mode, indicating that a part of model parameters of the first model and/or a model structure of the first model is updated;
a second updating mode, indicating that the first model is updated to a second model; and
a third updating mode, indicating that the first model is updated to a third model, wherein the third model is obtained through training based on sample sets in a plurality of scenarios.

20. The method according to claim 19, wherein the first information comprises at least one of:
model complexity, computational complexity of the model, a positioning accuracy of the model, updating duration of the model, and a number of samples required for training an updated model.

21. The method according to claim 20, wherein determining, by the first device, based on the first information, whether to update the first model based on the target updating mode, comprises:
in a case where at least one of model complexity corresponding to a model updated based on the target updating mode, computational complexity corresponding to the model updated based on the target updating mode, a positioning accuracy corresponding to the model updated based on the target updating mode, updating duration corresponding to the model updated based on the target updating mode, and a number of samples required for training an updated model corresponding to the model updated based on the target updating mode meets a preset condition, determining to update the first model based on the target updating mode.

22. The method according to claim 21, wherein in the case where the at least one of the model complexity corresponding to the model updated based on the target updating mode, the computational complexity corresponding to the model updated based on the target updating mode, the positioning accuracy corresponding to the model updated based on the target updating mode, the updating duration corresponding to the model updated based on the target updating mode, and the number of samples required for training the updated model corresponding to the model updated based on the target updating mode meets the preset condition, determining to update the first model based on the target updating mode, comprises:
in a case where the positioning accuracy of the model updated based on the target updating mode meets the preset condition, if at least one of the model complexity corresponding to the model updated based on the target updating mode, the computational complexity corresponding to the model updated based on the target updating mode, the updating duration corresponding to the model updated based on the target updating mode, and the number of samples required for training the updated model corresponding to the model updated based on the target updating mode meets the preset condition, determining to update the first model based on the target updating mode.

23. The method according to claim 21 or 22, wherein the model complexity meeting the preset condition comprises:
the model complexity corresponding to the model updated based on the target updating mode being at least less than a first model complexity threshold.

24. The method according to any one of claims 21 to 23, wherein the computational complexity of the model meeting the preset condition comprises:
the computational complexity corresponding to the model updated based on the target updating mode being less than a first computational complexity threshold.

25. The method according to any one of claims 21 to 24, wherein the positioning accuracy of the model meeting the preset condition comprises:
the positioning accuracy of the model updated based on the target updating mode reaching a first positioning accuracy; and/or
an improvement amount of the positioning accuracy of the model updated based on the target updating mode relative to a positioning accuracy of the model before updating reaching a first positioning accuracy improvement amount.

26. The method according to any one of claims 21 to 25, wherein the updating duration of the model meeting the preset condition comprises:
the updating duration corresponding to the model updated based on the target updating mode being less than a first duration threshold.

27. The method according to any one of claims 21 to 26, wherein the number of samples required for training the updated model meeting the preset condition comprises:
the number of samples required for training the model updated based on the target updating mode being smaller than a first sample number threshold.

28. The method according to any one of claims 19 to 27, further comprising:
determining, based on predicted location information of the terminal device and actual location information of the terminal device, a positioning accuracy of a model updated based on the target updating mode, wherein the predicted location information of the terminal device is output information of an updated model, or
the predicted location information of the terminal device is determined based on the output information of the updated model, and the output information of the updated model is intermediate information of location information of the terminal device.

29. The method according to any one of claims 19 to 27, further comprising:
determining, based on predicted intermediate information of location information of the terminal device and actual intermediate information of the location information of the terminal device, a positioning accuracy of an updated model, wherein the predicted intermediate information is output information of the updated model, and the predicted intermediate information is used to determine predicted location information of the terminal device.

30. The method according to claim 28 or 29, wherein the output information of the model updated based on the target updating mode is the intermediate information of the location information of the terminal device, and the method further comprises:
transmitting, by the first device, the intermediate information of the location information of the terminal device to a second device; and
receiving, by the first device, second information transmitted from the second device, wherein the second information comprises the location information of the terminal device predicted by the second device based on the intermediate information.

31. The method according to claim 30, wherein
the first device is the terminal device, and the second device is a network device; or
the first device is a first network device, and the second device is a second network device.

32. The method according to any one of claims 19 to 31, wherein the first device is the terminal device, and the method further comprises:
transmitting, by the terminal device, a first request message to a network device, wherein the first request message is used to request updating of the first model; and
receiving, by the terminal device, second indication information transmitted from the network device, wherein the second indication information is used to indicate updating of the first model.

33. The method according to any one of claims 19 to 32, further comprising:
transmitting, by the terminal device, third indication information to a network device, wherein the third indication information is used to indicate that the first model has been updated.

34. The method according to any one of claims 19 to 33, wherein the first device is a network device, and the method further comprises:
obtaining, from the terminal device, input information of the model and actual location information of the terminal device.

35. A communication device, comprising:
a processing unit, configured to determine, based on first information and/or first indication information of a second device, a target updating mode of a first model in a plurality of updating modes;
wherein the first model is used to determine location related information of a terminal device, the first information comprises performance parameter(s) of a model, the first indication information is used to indicate the target updating mode, and the plurality of updating modes comprise at least two of:
a first updating mode, indicating that a part of model parameters of the first model and/or a model structure of the first model is updated;
a second updating mode, indicating that the first model is updated to a second model; and
a third updating mode, indicating that the first model is updated to a third model, wherein the third model is obtained through training based on sample sets in a plurality of scenarios.

36. The communication device according to claim 35, wherein the first information comprises at least one of following performance parameters:
model complexity, computational complexity of the model, a positioning accuracy of the model, updating duration of the model, and a number of samples required for training an updated model.

37. The communication device according to claim 36, wherein the processing unit is further configured to:
determine an updating mode of which at least one of model complexity corresponding to the updated model, computational complexity of the model corresponding to the updated model, a positioning accuracy of the model corresponding to the updated model, updating duration of the model corresponding to the updated model, and a number of samples required for training the updated model corresponding to the updated model meets a preset condition as the target updating mode of the first model.

38. The communication device according to claim 37, wherein the processing unit is further configured to:
in a case where positioning accuracies of the model updated based on the plurality of updating modes meet the preset condition, determine the updating mode of which the at least one of the model complexity corresponding to the updated model, the computational complexity of the model corresponding to the updated model, the updating duration of the model corresponding to the updated model, and the number of samples required for training the updated model corresponding to the updated model meets the preset condition as the target updating mode of the first model.

39. The communication device according to claim 37, wherein the communication device is the terminal device, and the processing unit is further configured to:
in a case where the first indication information indicates the first updating mode, and at least one of model complexity corresponding to a model updated based on the first updating mode, computational complexity corresponding to the model updated based on the first updating mode, a positioning accuracy corresponding to the model updated based on the first updating mode, updating duration corresponding to the model updated based on the first updating mode, and a number of samples required for training an updated model corresponding to the model updated based on the first updating mode meets the preset condition, determine to update the first model based on the first updating mode; or
in a case where the first indication information indicates the second updating mode, and at least one of model complexity corresponding to a model updated based on the second updating mode, computational complexity corresponding to the model updated based on the second updating mode, a positioning accuracy corresponding to the model updated based on the second updating mode, updating duration corresponding to the model updated based on the second updating mode, and a number of samples required for training an updated model corresponding to the model updated based on the second updating mode meets the preset condition, determine to update the first model based on the second updating mode; or
in a case where the first indication information indicates the third updating mode, and at least one of model complexity corresponding to a model updated based on the third updating mode, computational complexity corresponding to the model updated based on the third updating mode, a positioning accuracy corresponding to the model updated based on the third updating mode, updating duration corresponding to the model updated based on the third updating mode, and a number of samples required for training an updated model corresponding to the model updated based on the third updating mode meets the preset condition, determine to update the first model based on the third updating mode.

40. The communication device according to any one of claims 37 to 39, wherein the model complexity meeting the preset condition comprises:
model complexity corresponding to a model updated based on the target updating mode being the lowest; and/or
the model complexity corresponding to the model updated based on the target updating mode being less than a first model complexity threshold.

41. The communication device according to any one of claims 37 to 40, wherein the computational complexity of the model meeting the preset condition comprises:
computational complexity corresponding to a model updated based on the target updating mode being the lowest; and/or
the computational complexity corresponding to the model updated based on the target updating mode being less than a first computational complexity threshold.

42. The communication device according to any one of claims 37 to 41, wherein the positioning accuracy of the model meeting the preset condition comprises:
a positioning accuracy of a model updated based on the target updating mode reaching a first positioning accuracy; and/or
an improvement amount of the positioning accuracy of the model updated based on the target updating mode relative to a positioning accuracy of the model before updating reaching a first positioning accuracy improvement amount.

43. The communication device according to any one of claims 37 to 42, wherein the updating duration of the model meeting the preset condition comprises:
updating duration corresponding to a model updated based on the target updating mode being the shortest; and/or
the updating duration corresponding to the model updated based on the target updating mode being less than a first duration threshold.

44. The communication device according to any one of claims 37 to 43, wherein the number of samples required for training the updated model meeting the preset condition comprises:
a number of samples required for training a model updated based on the target updating mode being smallest; and/or
the number of samples required for training the model updated based on the target updating mode being smaller than a first sample number threshold.

45. The communication device according to any one of claims 36 to 44, wherein the processing unit is further configured to:
determine, based on predicted location information of the terminal device and actual location information of the terminal device, a respective positioning accuracy of a model updated based on each updating mode of the plurality of updating modes;
wherein the predicted location information of the terminal device is output information of the updated model, or
the predicted location information of the terminal device is determined based on the output information of the updated model, and the output information of the updated model is intermediate information of location information of the terminal device.

46. The communication device according to any one of claims 36 to 44, wherein the processing unit is further configured to:
determine, based on predicted intermediate information of location information of the terminal device and actual intermediate information of the location information of the terminal device, a positioning accuracy of the updated model, wherein the predicted intermediate information is output information of the updated model, and the predicted intermediate information is used to determine predicted location information of the terminal device.

47. The communication device according to claim 45 or 46, wherein output information of a model updated based on the plurality of updating modes is intermediate information of location information of the terminal device, and the communication device further comprises:
a communication unit, configured to transmit the intermediate information of the location information of the terminal device to the second device; and
receive second information transmitted from the second device, wherein the second information comprises the location information of the terminal device predicted by the second device based on the intermediate information.

48. The communication device according to any one of claims 35 to 47, wherein
the communication device is the terminal device, and the second device is a network device; or
the communication device is a first network device, and the second device is a second network device.

49. The communication device according to claim 48, wherein the first network device is a transmission reception point (TRP), and the second network device is a location management function (LMF) entity.

50. The communication device according to any one of claims 35 to 49, wherein the communication device is the terminal device, and the communication device further comprises:
a communication unit, configured to transmit a first request message to a network device, wherein the first request message is used to request updating of the first model; and
receive second indication information transmitted from the network device, wherein the second indication information is used to indicate updating of the first model.

51. The communication device according to any one of claims 35 to 50, wherein the communication device is the terminal device, and the communication device further comprises:
a communication unit, configured to transmit third indication information to a network device, wherein the third indication information is used to indicate that the first model has been updated.

52. The communication device according to any one of claims 35 to 51, wherein the communication device is a network device, and the processing unit is further configured to:
obtain, from the terminal device, input information of the model and actual location information of the terminal device.

53. A communication device, comprising:
a processing unit, configured to determine, based on first information, whether to update a first model based on a target updating mode, wherein the first model is used to determine location related information of a terminal device, the first information comprises performance parameter(s) of a model, and the target updating mode is one of:
a first updating mode, indicating that a part of model parameters of the first model and/or a model structure of the first model is updated;
a second updating mode, indicating that the first model is updated to a second model; and
a third updating mode, indicating that the first model is updated to a third model, wherein the third model is obtained through training based on sample sets in a plurality of scenarios.

54. The communication device according to claim 53, wherein the first information comprises at least one of:
model complexity, computational complexity of the model, a positioning accuracy of the model, updating duration of the model, and a number of samples required for training an updated model.

55. The communication device according to claim 54, wherein the processing unit is further configured to:
in a case where at least one of model complexity corresponding to a model updated based on the target updating mode, computational complexity corresponding to the model updated based on the target updating mode, a positioning accuracy corresponding to the model updated based on the target updating mode, updating duration corresponding to the model updated based on the target updating mode, and a number of samples required for training an updated model corresponding to the model updated based on the target updating mode meets a preset condition, determine to update the first model based on the target updating mode.

56. The communication device according to claim 55, wherein the processing unit is further configured to:
in a case where the positioning accuracy of the model updated based on the target updating mode meets the preset condition, if at least one of the model complexity corresponding to the model updated based on the target updating mode, the computational complexity corresponding to the model updated based on the target updating mode, the updating duration corresponding to the model updated based on the target updating mode, and the number of samples required for training the updated model corresponding to the model updated based on the target updating mode meets the preset condition, determine to update the first model based on the target updating mode.

57. The communication device according to claim 55 or 56, the model complexity meeting the preset condition comprises:
the model complexity corresponding to the model updated based on the target updating mode being at least less than a first model complexity threshold.

58. The communication device according to any one of claims 55 to 57, wherein the computational complexity of the model meeting the preset condition comprises:
the computational complexity corresponding to the model updated based on the target updating mode being less than a first computational complexity threshold.

59. The communication device according to any one of claims 55 to 58, wherein the positioning accuracy of the model meeting the preset condition comprises:
the positioning accuracy of the model updated based on the target updating mode reaching a first positioning accuracy; and/or
an improvement amount of the positioning accuracy of the model updated based on the target updating mode relative to a positioning accuracy of the model before updating reaching a first positioning accuracy improvement amount.

60. The communication device according to any one of claims 55 to 59, wherein the updating duration of the model meeting the preset condition comprises:
the updating duration corresponding to the model updated based on the target updating mode being less than a first duration threshold.

61. The communication device according to any one of claims 55 to 60, the number of samples required for training the updated model meeting the preset condition comprises:
the number of samples required for training the model updated based on the target updating mode being smaller than a first sample number threshold.

62. The communication device according to any one of claims 53 to 61, wherein the processing unit is further configured to:
determine, based on predicted location information of the terminal device and actual location information of the terminal device, a positioning accuracy of a model updated based on the target updating mode, wherein the predicted location information of the terminal device is output information of an updated model, or
the predicted location information of the terminal device is determined based on the output information of the updated model, and the output information of the updated model is intermediate information of location information of the terminal device.

63. The communication device according to any one of claims 53 to 61, wherein the processing unit is further configured to:
determine, based on predicted intermediate information of location information of the terminal device and actual intermediate information of the location information of the terminal device, a positioning accuracy of an updated model, wherein the predicted intermediate information is output information of the updated model, and the predicted intermediate information is used to determine predicted location information of the terminal device.

64. The communication device according to claim 62 or 63, wherein the output information of the model updated based on the target updating mode is the intermediate information of the location information of the terminal device, and the communication device further comprises:
a communication unit, configured to transmit the intermediate information of the location information of the terminal device to a second device; and
receive second information transmitted from the second device, wherein the second information comprises the location information of the terminal device predicted by the second device based on the intermediate information.

65. The communication device according to claim 64, wherein
the communication device is the terminal device, and the second device is a network device; or
the communication device is a first network device, and the second device is a second network device.

66. The communication device according to any one of claims 53 to 65, wherein the communication device is the terminal device, and the communication device further comprises:
a communication unit, configured to transmit a first request message to a network device, wherein the first request message is used to request updating of the first model; and receive second indication information transmitted from the network device, wherein the second indication information is used to indicate updating of the first model.

67. The communication device according to any one of claims 53 to 66, wherein the communication device further comprises:
a communication unit, configured to transmit third indication information to a network device, wherein the third indication information is used to indicate that the first model has been updated.

68. The communication device according to any one of claims 53 to 67, wherein the communication device is a network device, and the processing unit is further configured to:
obtaining, from the terminal device, input information of the model and actual location information of the terminal device.

69. A communication device, comprising: a processor and a memory, wherein the memory is configured to store a computer program, the processor is configured to call the computer program stored in the memory and run the computer program to perform the method of any one of claims 1 to 18, or the method of any one of claims 19 to 34.

70. A chip, comprising: a processor configured to call a computer program from a memory and run the computer program, to enable a device equipped with the chip to perform the method of any one of claims 1 to 18, or the method of any one of claims 19 to 34.

71. A computer-readable storage medium, configured to store a computer program, wherein the computer program enables a computer to perform the method of any one of claims 1 to 18, or the method of any one of claims 19 to 34.

72. A computer program product, comprising computer program instructions, wherein the computer program instructions enable a computer to perform the method of any one of claims 1 to 18, or the method of any one of claims 19 to 34.

73. A computer program, wherein the computer program enables a computer to perform the method of any one of claims 1 to 18, or the method of any one of claims 19 to 34.
